(19) Europäisches Patentamt
European Patent Office
Office européen des brevets

(11) EP 3 390 524 B1

(12) **EUROPEAN PATENT SPECIFICATION**

(45) Date of publication and mention of the grant of the patent:
**31.07.2019 Bulletin 2019/31**

(21) Application number: **17718952.9**

(22) Date of filing: **25.04.2017**

(51) Int Cl.:
***C08L 23/06*** *(2006.01)*

(86) International application number:
**PCT/EP2017/059816**

(87) International publication number:
**WO 2017/186728 (02.11.2017 Gazette 2017/44)**

(54) **POLYOLEFIN COMPOSITIONS**

POLYOLEFINZUSAMMENSETZUNGEN

COMPOSITIONS DE POLYOLÉFINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.04.2016 EP 16167029**

(43) Date of publication of application:
**24.10.2018 Bulletin 2018/43**

(73) Proprietor: **Total Research & Technology Feluy**
**7181 Seneffe (BE)**

(72) Inventors:
- **BOUVY, Claire**
  **7090 Braine-le-Comte (BE)**
- **MISERQUE, Olivier**
  **1435 Mont-Saint-Guibert (BE)**
- **MICHEL, Jacques**
  **7181 Feluy (BE)**

(74) Representative: **Garcia Martin, Margarita**
**Total Research & Technology Feluy**
**Patent Department**
**Zone Industrielle Feluy C**
**7181 Seneffe (BE)**

(56) References cited:
**WO-A1-2012/119951**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### FIELD OF THE INVENTION

The present invention relates to a polyolefin composition comprising a first polyolefin and a second polyolefin. The present invention also relates to a process for the preparation of said polyolefin composition.

### BACKGROUND OF THE INVENTION

Polyolefins, such as polyethylene (PE), are synthesized by polymerizing monomers, such as ethylene ($CH_2=CH_2$). Polyolefins are cheap, safe and stable in most environments and easy to be processed. Polyolefins are useful in many applications. Olefin polymerizations (such as ethylene polymerization to polyethylene) are frequently carried out in a loop reactor (or double loop reactor) using monomer (such as ethylene), diluent and catalyst, optionally an activating agent, optionally one or more comonomer(s), and optionally hydrogen.

Polymerization in a loop reactor is usually performed under slurry conditions, with the produced polymer usually in a form of solid particles suspended in diluent. The slurry is circulated continuously in the reactor with a pump to maintain efficient suspension of the polymer solid particles in the liquid diluent. Polymer slurry is discharged from the loop reactor by means of settling legs, which operate on a batch principle to recover the slurry. Settling in the legs is used to increase the solid concentration of the slurry finally recovered as product slurry. The product slurry is further discharged through heated flash lines to a flash tank, where most of the diluent and unreacted monomers are flashed off and recycled. After the polymer product is collected from the reactor and the hydrocarbon residues are removed, the polymer product is dried resulting in a polymer resin. Additives can be added and finally the polymer may be mixed and pelletized resulting in a polymer product.

During the mixing step, polymer resin and optional additives are mixed intimately in order to obtain a polymer product as homogeneous as possible. Preferably, mixing is performed in an extruder wherein the ingredients are mixed together and the polymer product and optionally some of the additives are melted so that intimate mixing can occur. The melt is then extruded into a strand, cooled and granulated, e.g. to form pellets. In this form the resulting compound can then be used for the manufacturing of different objects. Two or more different polyethylene resins can be produced separately and subsequently mixed, representing a physical blending process.

However, complications may occur during preparation of different polyolefin resins into a polyolefin product. In particular, preparation of homogeneous mixtures has been found to be difficult, especially for mixtures of High Molecular Weight (HMW) and Low Molecular Weight (LMW) polymers that are thermodynamically compatible. Non-homogeneous polymer mixtures are not optimal for application in end-products. Consequently, there remains a need in the art for homogeneous polyolefin products produced from mixtures of polyolefin resins.

### SUMMARY OF THE INVENTION

It is therefore an object of the present invention to provide a polyolefin composition having a multimodal molecular weight distribution with enhanced homogeneity, and therefore decreased gel formation. It is also an object of the present invention to provide a process for preparing a polyolefin composition having multimodal molecular weight distribution with enhanced homogeneity. It is also an object of the present invention to provide a polyolefin composition suitable for pipes, caps and closures, and films. The inventors have now discovered that these objects can be met either individually or in any combination by the present polyolefin compositions and the processes for their production. The inventors have surprisingly found that by selecting the appropriate first polyolefin, and combining it with a suitable second polyolefin, desired polyolefin compositions can be easily achieved using standard extrusion processes.

According to a first aspect, the present invention provides a polyolefin composition comprising: a) at least one first polyolefin having a multimodal molecular weight distribution and prepared in the presence of at least one metallocene catalyst; and b) at least one second polyolefin having a $M_w/M_n$ of at least 10.0, preferably having a long chain branching index $g_{rheo}$ of at least 0.85, preferably wherein the second polyolefin was prepared in the presence of at least one Ziegler-Natta catalyst, wherein said second polyolefin is present in an amount of at least 1.0 % by weight based on the total weight of the polyolefin composition. Preferably, the second polyolefin has a High Load Melt Index HLMI of at least 0.60 times the High Load Melt Index HLMI of the first polyolefin and of at most 1.40 times the High Load Melt Index HLMI of the first polyolefin, as measured following the procedure of ISO 1133 condition G using a temperature of 190 °C and a load of 21.6 kg.

According to a second aspect, the invention encompasses formed articles comprising the polyolefin composition according to the first aspect of the invention.

According to a third aspect, the invention encompasses a process for preparing the polyolefin composition according to the first aspect of the invention, comprising the steps of: (A) providing at least one first polyolefin having a

multimodal molecular weight distribution and prepared in the presence of at least one metallocene catalyst; (B) providing at least one second polyolefin having a $M_w/M_n$ of at least 10.0, preferably having a long chain branching index $g_{rheo}$ of at least 0.85, preferably wherein the second polyolefin was prepared in the presence of at least one Ziegler-Natta catalyst, wherein said second polyolefin is present in an amount of at least 1.0 % by weight based on the total weight of the polyolefin composition; and (C) blending said at least one first polyolefin with said second polyolefin to obtain the polyolefin composition. Preferably, the second polyolefin has a High Load Melt Index HLMI of at least 0.60 times the High Load Melt Index HLMI of the first polyolefin and of at most 1.40 times the High Load Melt Index HLMI of the first polyolefin, as measured following the procedure of ISO 1133 condition G using a temperature of 190 °C and a load of 21.6 kg.

The independent and dependent claims, as well as the numbered statements below, set out particular and preferred features of the invention. Features from the dependent claims or numbered statements may be combined with features of the independent or other dependent claims or numbered statements as appropriate. In the following passages, different aspects of the invention are defined in more detail. Each aspect so defined may be combined with any other aspect or aspects unless clearly indicated to the contrary. In particular, any feature or statement indicated as being preferred or advantageous may be combined with any other feature or features indicated as being preferred or advantageous.

## BRIEF DESCRIPTION OF THE DRAWINGS

Figure 1 represents 4 pictures using darkfield illumination of a press-out of a sample prepared using composition I as described in example 1, whereby the final figure used color contrast (but shown in grayscale here) to assist in counting the nodules.

Figure 2 represents 4 pictures using darkfield illumination of a press-out of a sample prepared using polyethylene A as described in example 1, whereby the final figure used color contrast (but shown in grayscale here) to assist in counting the nodules.

Figure 3 represents 4 pictures using darkfield illumination of a press-out of a sample prepared using composition II as described in example 2, whereby the final figure used color contrast (but shown in grayscale here) to assist in counting the nodules.

Figure 4 represents 4 pictures using darkfield illumination of a press-out of a sample prepared using polyethylene C as described in example 2, whereby the final figure used color contrast (but shown in grayscale here) to assist in counting the nodules.

## DETAILED DESCRIPTION OF THE INVENTION

Before the present polyolefin compositions, processes, articles, and uses encompassed by the invention are described, it is to be understood that this invention is not limited to particular polyolefin compositions, processes, articles, and uses described, as such polyolefin compositions, processes, articles, and uses may, of course, vary. It is also to be understood that the terminology used herein is not intended to be limiting, since the scope of the present invention will be limited only by the appended claims.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. When describing the polyolefin compositions, processes, articles, and uses of the invention, the terms used are to be construed in accordance with the following definitions, unless the context dictates otherwise.

As used herein, the singular forms "a", "an", and "the" include both singular and plural referents unless the context clearly dictates otherwise. By way of example, "a polyolefin" means one polyolefin or more than one polyolefins. The terms "comprising", "comprises" and "comprised of' as used herein are synonymous with "including", "includes" or "containing", "contains", and are inclusive or open-ended and do not exclude additional, non-recited members, elements or method steps. The terms "comprising", "comprises" and "comprised of" also include the term "consisting of". The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein. Reference throughout this specification

to "one embodiment" or "an embodiment" means that a particular feature, structure or characteristic described in connection with the embodiment is included in at least one embodiment of the present invention. Thus, appearances of the phrases "in one embodiment", "in an embodiment", or "in some embodiments" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims and statements, any of the embodiments can be used in any combination.

Preferred statements (features) and embodiments of the polyolefin compositions, processes, articles, and uses of this invention are set herein below. Each statement and embodiment of the invention so defined may be combined with any other statement and/or embodiment, unless clearly indicated to the contrary. In particular, any feature indicated as being preferred or advantageous may be combined with any other features or statements indicated as being preferred or advantageous. Hereto, the present invention is in particular captured by any one or any combination of one or more of the below numbered aspects and embodiments 1 to 41, with any other statement and/or embodiment.

1. A polyolefin composition comprising:

a) at least one first polyolefin having a multimodal molecular weight distribution and prepared in the presence of at least one metallocene catalyst; and

b) at least one second polyolefin having a $M_w/M_n$ of at least 10.0, wherein said second polyolefin is present in an amount of at least 1.0 % by weight based on the total weight of the polyolefin composition; wherein the second polyolefin has a High Load Melt Index HLMI of at least 0.60 times the High Load Melt Index HLMI of the first polyolefin and of at most 1.40 times the High Load Melt Index HLMI of the first polyolefin, preferably of at least 0.65 times the High Load Melt Index HLMI of the first polyolefin and of at most 1.35 times the High Load Melt Index HLMI of the first polyolefin, preferably of at least 0.70 times the High Load Melt Index HLMI of the first polyolefin and of at most 1.30 times the High Load Melt Index HLMI of the first polyolefin, as measured following the procedure of ISO 1133 condition G using a temperature of 190 °C and a load of 21.6 kg.

2. A polyolefin composition comprising:

a) at least one first polyolefin having a multimodal molecular weight distribution and prepared in the presence of at least one metallocene catalyst; and

b) at least one second polyolefin having a $M_w/M_n$ of at least 10.0 and having a long chain branching index $g_{rheo}$ of at least 0.85, preferably wherein the second polyolefin was prepared in the presence of at least one Ziegler-Natta catalyst, wherein said second polyolefin is present in an amount of at least 1.0 % by weight based on the total weight of the polyolefin composition; wherein the second polyolefin has a High Load Melt Index HLMI of at least 0.60 times the High Load Melt Index HLMI of the first polyolefin and of at most 1.40 times the High Load Melt Index HLMI of the first polyolefin, preferably of at least 0.65 times the High Load Melt Index HLMI of the first polyolefin and of at most 1.35 times the High Load Melt Index HLMI of the first polyolefin, preferably of at least 0.70 times the High Load Melt Index HLMI of the first polyolefin and of at most 1.30 times the High Load Melt Index HLMI of the first polyolefin, as measured following the procedure of ISO 1133 condition G using a temperature of 190 °C and a load of 21.6 kg.

3. A polyolefin composition comprising:

a) at least one first polyolefin having a multimodal molecular weight distribution and prepared in the presence of at least one metallocene catalyst; and

b) at least one second polyolefin having a $M_w/M_n$ of at least 10.0 and wherein the second polyolefin was prepared in the presence of at least one Ziegler-Natta catalyst, preferably having a long chain branching index $g_{rheo}$ of at least 0.85, wherein said second polyolefin is present in an amount of at least 1.0 % by weight based on the total weight of the polyolefin composition; wherein the second polyolefin has a High Load Melt Index of at least 0.60 times the High Load Melt Index HLMI of the first polyolefin and of at most 1.40 times the High Load Melt Index HLMI of the first polyolefin, preferably of at least 0.65 times the High Load Melt Index HLMI of the first polyolefin and of at most 1.35 times the High Load Melt Index HLMI of the first polyolefin, preferably of at least

0.70 times the High Load Melt Index HLMI of the first polyolefin and of at most 1.30 times the High Load Melt Index HLMI of the first polyolefin, as measured following the procedure of ISO 1133 condition G using a temperature of 190 °C and a load of 21.6 kg.

4. The polyolefin composition according to any one of statements 1 to 3, wherein the first polyolefin comprises a high molecular weight component and a low molecular weight component, wherein the weight average molecular weight $M_w$ of the first polyolefin is lower than the weight average molecular weight $M_w$ of the second polyolefin, and wherein the weight average molecular weight $M_w$ of the second polyolefin is lower than the weight average molecular weight $M_w$ of the high molecular weight component of the first polyolefin.

5. The polyolefin composition according to any one of statements 1 to 4, wherein the polyolefin is polyethylene.

6. The polyolefin composition according to any one of statements 1 to 5, wherein the polyolefin composition is a polyethylene composition, the first polyolefin is a first polyethylene, and the second polyolefin is a second polyethylene.

7. The polyolefin composition according to any one of statements 1 to 6, wherein the first polyolefin is a physical or a chemical blend of at least two metallocene-produced polyolefins each with a different weight average molecular weight $M_w$.

8. The polyolefin composition according to any one of statements 1 to 7, wherein the first polyolefin has a bimodal molecular weight distribution and is prepared in at least two reactors connected in series, in the presence of at least one metallocene catalyst.

9. The polyolefin composition according to any one of statements 1 to 8, wherein the polyolefin composition comprises at least 50 % by weight of the first polyolefin, relative to the total weight of the polyolefin composition, preferably at least 60 % by weight of the first polyolefin, preferably at least 70 % by weight of the first polyolefin, preferably at least 80 % by weight of the first polyolefin, preferably at least 85 % by weight of the first polyolefin, relative to the total weight of the polyolefin composition.

10. The polyolefin composition according to any one of statements 1 to 9, wherein the High Load Melt Index HLMI of the first polyolefin is at most 100 g/10 min, for example at most 50 g/10 min, for example at most 30 g/10 min, for example at most 25 g/10 min, for example at most 20 g/10 min, for example at most 15 g/10 min.

11. The polyolefin composition according to any one of statements 1 to 10, wherein the ratio of the High Load Melt Index HLMI to the $MI_5$, i.e. HLMI/$MI_5$ both expressed in the same units, of the second polyolefin is at least 15, for example at least 20.

12. The polyolefin composition according to any one of statements 1 to 11, wherein the ratio of the High Load Melt Index HLMI to the $MI_5$, i.e. HLMI/$MI_5$ both expressed in the same units, of the second polyolefin is at most 40, for example at most 30.

13. The polyolefin composition according to any one of statements 1 to 12, wherein the ratio of the High Load Melt Index HLMI to the $MI_5$, i.e. HLMI/$MI_5$ both expressed in the same units, of the second polyolefin is from at least 15 to at most 40, for example from at least 20 to at most 30.

14. The polyolefin composition according to any one of statements 1 to 13, wherein the first polyolefin has a density of at least 0.900 g/cm$^3$ to at most 0.960 g/cm$^3$, preferably of at least 0.940 g/cm$^3$ to at most 0.960 g/cm$^3$, for example of at least 0.945 g/cm$^3$ to at most 0.955 g/cm$^3$.

15. The polyolefin composition according to any one of statements 1 to 14, wherein the first polyolefin has a weight average molecular weight $M_w$ of at least 80 kDa, preferably at least 100 kDa.

16. The polyolefin composition according to any one of statements 1 to 15, wherein the first polyolefin, preferably a polyethylene, has an $M_w/M_n$ ratio of at least 4.0, preferably of at least 4.5, preferably of at least 5.0, preferably of at least 6.0, preferably of at least 7.0, preferably of at least 8.0, preferably of at least 9.0, for example of at least 9.5, wherein $M_w$ is the weight average molecular weight and $M_n$ is the number average molecular weight and $M_w$ and $M_n$ are both expressed in the same units.

17. The polyolefin composition according to any one of statements 1 to 16, wherein the first polyolefin has an $M_w/M_n$ ratio of at most 25.0, preferably of at most 20.0, preferably of at most 17.0, preferably of at most 16.0, preferably of at most 15.0, for example of at most 14.0, for example of at most 13.0.

18. The polyolefin composition according to any one of statements 1 to 17, wherein the first polyolefin has an $M_w/M_n$ ratio from at least 4.0 to at most 25.0, for example from at least 4.5 to at most 25.0, for example from at least 5.0 to at most 20.0, for example from at least 6.0 to at most 17.0, for example from at least 7.0 to at most 16.0, for example from at least 8.0 to at most 15.0, for example from at least 9.0 to at most 14.0, for example from at least 9.5 to at most 13.0.

19. The polyolefin composition according to any one of statements 1 to 18, wherein the first polyolefin has a long chain branching index $g_{rheo}$ that is at most 0.90, preferably at most 0.80, preferably at most 0.70, preferably the first polyolefin is polyethylene that has a long chain branching index grheo that is at most 0.90, preferably at most 0.80, preferably at most 0.70.

20. The polyolefin composition according to any one of statements 1 to 19, wherein the polyolefin composition comprises at least 1.0 % by weight of the second polyolefin, preferably at least 2.5 %, preferably at least 5.0 %, preferably at least 7.5 % by weight of the second polyolefin, based on the total weight of the polyolefin composition.

21. The polyolefin composition according to any one of statements 1 to 20, wherein the polyolefin composition comprises at most 30.0 % by weight of the second polyolefin, preferably at most 25.0 %, preferably at most 20.0 %, preferably at most 15.0 % by weight of a second polyolefin, based on the total weight of the polyolefin composition.

22. The polyolefin composition according to any one of statements 1 to 21, wherein the polyolefin composition comprises from at least 1.0 % to at most 30.0 % by weight of the second polyolefin, preferably from at least 2.5 % to at most 25.0 %, preferably from at least 5.0 % to at most 20.0 %, preferably from at least 7.5 % to at most 15.0 % by weight of the second polyolefin, based on the total weight of the polyolefin composition.

23. The polyolefin composition according to any one of statements 1 to 22, wherein the second polyolefin is a physical or a chemical blend of at least two Ziegler-Natta-produced polyolefins each with a different weight average molecular weight $M_w$, preferably wherein the second polyolefin is a physical or a chemical blend of at least two Ziegler-Natta-produced polyethylene each with a different weight average molecular weight $M_w$.

24. The polyolefin composition according to any one of statements 1 to 23, wherein the second polyolefin has a bimodal molecular weight distribution and is prepared in at least two reactors connected in series, in the presence of at least one Ziegler-Natta catalyst.

25. The polyolefin composition according to any one of statements 1 to 24, wherein the second polyolefin, preferably polyethylene, has a $M_w/M_n$ of at least 10.0, for example of at least 11.0, for example of at least 12.0, for example of at least 13.0, for example of at least 14.0, preferably of at least 15.0, for example of at least 16.0, for example of at least 17.0.

26. The polyolefin composition according to any one of statements 1 to 25, wherein the second polyolefin, preferably polyethylene, has an $M_w/M_n$ ratio of at most 30.0, preferably of at most 25.0, preferably of at most 20.0.

27. The polyolefin composition according to any one of statements 1 to 26, wherein the second polyolefin, preferably polyethylene, has an $M_w/M_n$ ratio from at least 10.0 to at most 30.0, preferably from at least 12.0 to at most 25.0, preferably from at least 14.0 to at most 20.0.

28. The polyolefin composition according to any one of statements 1 to 27, wherein the second polyolefin has a High Load Melt Index HLMI of at most 30 g/10 min, for example at most 20 g/10 min, for example at most 10 g/10 min, preferably at most 8 g/10 min, preferably at most 5 g/10 min, preferably the second polyolefin is polyethylene having a HLMI of at most 30 g/10 min, for example at most 20 g/10 min, for example at most 10 g/10 min, preferably at most 8 g/10 min, preferably at most 5 g/10 min.

29. The polyolefin composition according to any one of statements 1 to 28, wherein the second polyolefin has a density of at least 0.900 g/cm$^3$ to at most 0.960 g/cm$^3$, preferably of at least 0.940 g/cm$^3$ to at most 0.960 g/cm$^3$, for example of at least 0.945 g/cm$^3$ to at most 0.955 g/cm$^3$, preferably the second polyolefin is polyethylene having

a density of at least 0.900 g/cm$^3$ to at most 0.960 g/cm$^3$, preferably of at least 0.940 g/cm$^3$ to at most 0.960 g/cm$^3$, for example of at least 0.945 g/cm$^3$ to at most 0.955 g/cm$^3$, as determined with according to the ISO 1183-1:2012 at 23 °C.

30. The polyolefin composition according to any one of statements 1 to 29, wherein the second polyolefin has a weight average molecular weight $M_w$ of at least 130 kDa, preferably at least 150 kDa, preferably at least 180 kDa, preferably at least 200 kDa, preferably at least 220 kDa, preferably at least 240 kDa.

31. The polyolefin composition according to any one of statements 1 to 30, wherein the second polyolefin, preferably polyethylene, has a $g_{rheo}$ of at least 0.85 and at most 1.20, preferably of at least 0.90 and at most 1.10, preferably of about 1.00.

32. The polyolefin composition according to any one of statements 1 to 31, wherein the polyolefin composition, preferably the polyethylene composition, has an $M_w/M_n$ ratio of at least 8.0, and preferably of at least 9.0.

33. The polyolefin composition according to any one of statements 1 to 32, wherein the polyolefin composition, preferably the polyethylene composition, has a High Load Melt Index HLMI of at least 5 g/10 min, for example at least 6 g/10 min, for example at least 7 g/10 min, preferably at least 8 g/10 min, for example at most 12 g/10 min, for example at least 8 g/10min and at most 12 g/10 min, for example about 10 g/10 min.

34. An article comprising the polyolefin composition according to any one of statements 1 to 33.

35. The article according to statement 34, wherein the article is selected from the group comprising: pipes, films, caps and closures.

36. A process for preparing a polyolefin composition according to any one of statements 1 to 33, comprising the steps of:

(A) providing at least one first polyolefin having a multimodal molecular weight distribution and prepared in the presence of at least one metallocene catalyst;

(B) providing at least one second polyolefin having a $M_w/M_n$ of at least 10.0, preferably having a long chain branching index $g_{rheo}$ of at least 0.85, preferably wherein the second polyolefin was prepared in the presence of at least one Ziegler-Natta catalyst, wherein said second polyolefin is present in an amount of at least 1.0 % by weight based on the total weight of the polyolefin composition; and

(C) blending said at least one first polyolefin, with said silica nanoparticles and/or with said second polyolefin, to obtain the polyolefin composition.

37. The process according to statement 36, wherein the second polyolefin has a High Load Melt Index HLMI of at least 0.60 times the High Load Melt Index HLMI of the first polyolefin and of at most 1.40 times the High Load Melt Index HLMI of the first polyolefin, preferably of at least 0.65 times the High Load Melt Index HLMI of the first polyolefin and of at most 1.35 times the High Load Melt Index HLMI of the first polyolefin, preferably at least 0.70 times the High Load Melt Index HLMI of the first polyolefin and of at most 1.30 times the High Load Melt Index HLMI of the first polyolefin, as measured following the procedure of ISO 1133 condition G using a temperature of 190 °C and a load of 21.6 kg.

38. The process according to any one of statements 36 or 37, wherein the first polyolefin comprises a high molecular weight component and a low molecular weight component, wherein the weight average molecular weight $M_w$ of the first polyolefin is lower than the weight average molecular weight $M_w$ of the second polyolefin, and wherein the weight average molecular weight $M_w$ of the second polyolefin is lower than the weight average molecular weight $M_w$ of the high molecular weight component of the first polyolefin.

39. A process for preparing a polyolefin composition according to any one of statements 1 to 33, comprising the steps of:

(A) providing at least one first polyolefin having a multimodal molecular weight distribution and prepared in the presence of at least one metallocene catalyst;

(B) providing at least one second polyolefin having a $M_w/M_n$ of at least 10.0, wherein said second polyolefin is present in an amount of at least 1.0 % by weight based on the total weight of the polyolefin composition; wherein the second polyolefin has a High Load Melt Index HLMI of at least 0.60 times the High Load Melt Index HLMI of the first polyolefin and of at most 1.40 times the High Load Melt Index HLMI of the first polyolefin, preferably of at least 0.65 times the High Load Melt Index HLMI of the first polyolefin and of at most 1.35 times the High Load Melt Index HLMI of the first polyolefin, preferably of at least 0.70 times the High Load Melt Index HLMI of the first polyolefin and of at most 1.30 times the High Load Melt Index HLMI of the first polyolefin, as measured following the procedure of ISO 1133 condition G using a temperature of 190 °C and a load of 21.6 kg;

(C) blending said at least one first polyolefin, with said second polyolefin, to obtain the polyolefin composition.

40. The process according to any one of statements 36 to 39, wherein step (C) is performed in an extruder.

41. The process according to any one of statements 36 to 40, wherein the process further comprises the step of:
(D) processing the polyolefin composition obtained in step (C) at a temperature above the melt temperature of said polyolefin composition;
wherein step (D) preferably comprises extruding a mixture comprising the first polyolefin and the second polyolefin in an extruder.

According to a first aspect, the invention provides a polyolefin composition. As used herein, the term "polyolefin composition" is used to denote a blend of at least two polyolefins. Suitable blends for the polyolefin composition according to the invention may be physical blends or chemical blends. The polyolefin composition according to the invention comprises one or more polyolefins. As used herein, the terms "olefin polymer" and "polyolefin" are used interchangeably.

The polyolefins (first and second polyolefins) used in the present invention may be any olefin homo-polymer or any co-polymer of an olefin and one or more comonomers. The olefin can for example be ethylene, propylene, 1-butene, 1-pentene, 1-hexene, 4-methyl-1-pentene or 1-octene, but also cycloolefins such as for example cyclopentene, cyclohexene, cyclooctene or norbornene. Most preferred polyolefins for use in the present invention are olefin homo-polymers and co-polymers of an olefin and one or more comonomers, wherein said olefin and said one or more comonomer is different, and wherein said olefin is ethylene or propylene. The term "comonomer" refers to olefin comonomers which are suitable for being polymerized with olefin monomers, preferably ethylene or propylene monomers. Comonomers may comprise but are not limited to aliphatic $C_2$-$C_{20}$ alpha-olefins. Examples of suitable aliphatic $C_2$-$C_{20}$ alpha-olefins include ethylene, propylene, 1-butene, 4-methyl-1-pentene, 1-hexene, 1-octene, 1-decene, 1-dodecene, 1-tetradecene, 1-hexadecene, 1-octadecene and 1-eicosene. In some embodiments, the comonomer is vinyl acetate.

Preferably, the polyolefin is selected from polyethylene and polypropylene homo- and co-polymers. More preferably the polyolefin is polyethylene. Most preferably, the polyolefin composition is a polyethylene composition, the first polyolefin is a first polyethylene, and the second polyolefin is a second polyethylene. Suitable polyethylene includes but is not limited to homo-polymer of ethylene, co-polymer of ethylene and a higher alpha-olefin comonomer. The term "co-polymer" refers to a polymer, which is made by linking two different types of monomer in the same polymer chain. The term "homo-polymer" refers to a polymer which is made by linking ethylene monomers, in the absence of comonomers. In some embodiments of the present invention, said comonomer is 1-hexene.

The polymerization of the polyolefin can be carried out in gas, solution or slurry phase. Slurry polymerization is preferably used to prepare the polyolefin resin, preferably in a slurry loop reactor (single or double loop reactor) or a continuously stirred tank. The polymerization temperature can range from 20 °C to 125 °C, preferably from 55 °C to 105 °C, more preferably from 60 °C to 100 °C, and most preferably from 65 °C to 98 °C. The pressure can range from 0.1 to 10.0 MPa, preferably from 1.0 to 6.0 MPa, more preferably from 2.0 to 4.5 MPa.

According to the invention, the polyolefin composition, preferably the polyethylene composition, comprises:

a) at least one first polyolefin having a multimodal molecular weight distribution and prepared in the presence of at least one metallocene catalyst. Preferably the polyethylene composition comprises a) at least one first polyethylene having a multimodal molecular weight distribution and prepared in the presence of at least one metallocene catalyst.

In some preferred embodiments, the polyolefin composition, preferably the polyethylene composition, comprises at least 50 % by weight of the first polyolefin (preferably polyethylene), relative to the total weight of the polyolefin composition. Preferably, the polyethylene composition comprises at least 60 % by weight of the first polyethylene, preferably at least 70 % by weight of the first polyethylene, preferably at least 80 % by weight of the first polyethylene, preferably at least 85 % by weight of the first polyethylene, relative to the total weight of the polyethylene composition.

According to the invention, the first polyolefin, preferably the first polyethylene, has a multimodal molecular weight distribution, preferably a bimodal molecular weight distribution. As used herein, the term "monomodal polyolefins"

or "polyolefins with a monomodal molecular weight distribution" refers to polyolefins having one maximum in their molecular weight distribution curve, which is also defined as a unimodal distribution curve. As used herein, the term "polyolefins with a bimodal molecular weight distribution" or "bimodal polyolefins" it is meant, polyolefins having a distribution curve being the sum of two unimodal molecular weight distribution curves. By the term "polyolefins with a multimodal molecular weight distribution" or "multimodal polyolefins" it is meant polyolefins with a distribution curve being the sum of at least two, preferably more than two unimodal distribution curves, and refers to a polyethylene product having two or more distinct but possibly overlapping populations of polyethylene macromolecules each having different weight average molecular weights $M_w$. The multimodal polyethylene can have an "apparent monomodal" molecular weight distribution, which is a molecular weight distribution curve with a single peak and no shoulder. Nevertheless, the polyethylene will still be multimodal if it comprises two distinct populations of polyethylene macromolecules each having a different weight average molecular weights $M_w$, as defined above, for example when the two distinct populations were prepared in different reactors and/or under different conditions.

Polyethylene having a multimodal molecular weight distribution can be obtained by chemical or physical blending of at least two polyethylene fractions having different molecular weight distributions. In some embodiments, polyethylene having a multimodal molecular weight distribution can be obtained by blending at the polyethylene particle level wherein the different fractions of polyethylene can be obtained by operating two reactors under different polymerization conditions and transferring the first fraction to the second reactor, i.e. the reactors are connected in series. The first polyolefin, preferably polyethylene, may be a physical or a chemical blend of at least two metallocene-produced polyolefins, preferably polyethylene, each with a different weight average molecular weight $M_w$. In some embodiments, the first polyolefin is formed in at least two reactors, which may be separate or coupled to each other in series, wherein each reactor produces a polyolefin with a different weight average molecular weight $M_w$.

In some embodiments, the first polyolefin, preferably polyethylene, has a bimodal molecular weight distribution and is preferably prepared in at least two reactors connected in series, in the presence of a metallocene catalyst. In some embodiments, the first polyolefin is a physical blend of at least two polyolefins each having a monomodal molecular weight distribution and each being produced in the presence of a metallocene catalyst, wherein at least one polyolefin has a high weight average molecular weight and at least one other polyolefin has a low weight average molecular weight, or wherein at least one polyolefin has a higher weight average molecular weight than at least one other polyolefin.

When comprising multiple distinct populations, for example prepared in two different reactors, the total weight average molecular weight $M_w$ may be linked to the weight average molecular weights of the separate fractions by the following formula:

$$Mw\,(total) = \sum_i wt\%(fraction_i) \times Mw\,(fraction_i)$$

When prepared in two reactors connected in series, the properties of the fraction prepared in the first reactor (fraction A) can be measured directly. The properties of the fraction prepared in the second reactor (for example fraction B) can typically be calculated. For example, the weight average molecular weight $M_w$ of fraction B can be calculated based on the following expression:

$$M_w(\text{final resin}) = wt\%(\text{fraction A}) \times M_w(\text{fraction A}) + wt\%(\text{fraction B}) \times M_w(\text{fraction B}),$$

with "wt%" meaning percent by weight.

In some preferred embodiments, the first polyolefin, preferably a polyethylene, comprises a high molecular weight fraction and a low molecular weight fraction, wherein each molecular weight fraction is prepared in a different reactor. In some embodiments, the weight average molecular weight of the high molecular weight fraction is at least 130 kDa, preferably at least 200 kDa, for example about 300 kDa. In some embodiments, the weight average molecular weight of the low molecular weight fraction is at most 40 kDa, preferably most 30 kDa, for example about 20 kDa.

In some embodiments, the first polyolefin prepared in the presence of at least one metallocene catalyst, preferably a polyethylene, comprises a low mass fraction of from 10 % to 90 % by weight and a high mass fraction which is comprised in such a way that the sum is 100 % by weight, with % by weight relative to the total weight of the polyolefin; preferably a low mass fraction of from 20 % to 80 % by weight, even more preferably from 30 % to 70 % by weight, most preferably from 40 % to 60 % by weight, and a high mass fraction which is comprised in such a way that the sum of the low mass fraction and the high mass fraction is 100 % by weight, with % by weight relative to the total weight of the polyolefin. As used herein, the terms "low mass fraction" and "low molecular weight component" refer to a fraction with a relatively lower molecular weight, while the terms "high mass fraction" and "high molecular weight component" refer to a fraction with a relatively higher molecular weight. Preferably both fractions/components are prepared in separate reactors and/or under different operating conditions.

In some embodiments, the polyolefin prepared in the presence of at least one metallocene catalyst, preferably polyethylene, comprises at least two fractions, the first fraction having a unimodal molecular weight distribution with a weight average molecular weight of at most 50 kDa, for example at most 40 kDa, for example at most 30 kDa, for example at most 25 kDa, for example at most 20 kDa, and a second fraction having a unimodal molecular weight distribution having a weight average molecular weight of at least 130 kDa, for example at least 200 kDa, for example at least 250 kDa, for example at least 300 kDa. In some embodiments, the polyolefin, preferably polyethylene, comprises a low mass fraction having a weight average molecular weight of at most 50 kDa, for example at most 40 kDa, for example at most 30 kDa, for example at most 25 kDa, for example at most 20 kDa, of from 10 % to 90 % by weight and a high mass fraction having a weight average molecular weight of at least 130 kDa, for example at least 200 kDa, for example at least 250 kDa, for example at least 300 kDa which is comprised in such a way that the sum is 100 % by weight, with % by weight relative to the total weight of the polyolefin. In some embodiments, the polyolefin, preferably polyethylene, comprises 20 % to 80 % by weight, even more preferably from 30 % to 70 % by weight, most preferably from 40 % to 60 % by weight of a low mass fraction having a weight average molecular weight of at most 50 kDa, for example at most 40 kDa, for example at most 30 kDa, for example at most 25 kDa, for example at most 20 kDa, and a high mass fraction having a weight average molecular weight of at least 130 kDa, for example at least 200 kDa, for example at least 250 kDa, for example at least 300 kDa, which is comprised in such a way that the sum is 100 % by weight, with % by weight relative to the total weight of the polyolefin. The weight average molecular weight can be measured by Size Exclusion Chromatography (SEC) at high temperatures (145 °C), as described in the example section.

In some preferred embodiments, the first polyolefin, preferably polyethylene, comprises a high molecular weight component and a low molecular weight component, wherein the weight average molecular weight $M_w$ of the first polyolefin is lower than the weight average molecular weight $M_w$ of the second polyolefin, and wherein the weight average molecular weight $M_w$ of the second polyolefin is lower than the weight average molecular weight $M_w$ of the high molecular weight component of the first polyolefin.

In some embodiments, the High Load Melt Index (HLMI) of the first polyolefin, preferably polyethylene, is at most 100 g/10 min, for example at most 50 g/10 min, for example at most 20 g/10 min, for example at most 15 g/10 min, as measured following the procedure of ISO 1133 condition G using a temperature of 190 °C and a load of 21.6 kg. In such embodiments, the polyolefin composition is preferably used to prepare caps and closures.

In some embodiments, the High Load Melt Index (HLMI) of the first polyolefin, preferably polyethylene, is at most 30 g/10 min, for example at most 25 g/10 min, for example at most 15 g/10 min. In such embodiments, the polyolefin composition is preferably used to prepare pipes.

In some embodiments, the ratio of the High Load Melt Index (HLMI) to the $MI_5$ (HLMI/$MI_5$, both expressed in the same units) of the second polyolefin, preferably polyethylene, is at least 15, for example at least 20, the High Load Melt Index (HLMI) as measured following the procedure of ISO 1133 condition G using a temperature of 190 °C and a load of 21.6 kg, and $MI_5$ as measured following the procedure of ISO 1133 condition T at a temperature of 190 °C under a load of 5.00 kg. In some embodiments, the ratio of the High Load Melt Index (HLMI) to the $MI_5$ (HLMI/$MI_5$, both expressed in the same units) of the second polyolefin, preferably polyethylene, is at most 40, for example at most 30. In some embodiments, the ratio of the High Load Melt Index (HLMI) to the $MI_5$ (HLMI/$MI_5$, both expressed in the same units) of the second polyolefin, preferably polyethylene, is from at least 15 to at most 40, for example from at least 20 to at most 30.

In some embodiments, the first polyolefin, preferably polyethylene, has a density of from 0.900 g/$cm^3$ to 0.960 g/$cm^3$, preferably from 0.940 g/$cm^3$ to 0.960 g/$cm^3$, for example from 0.945 g/$cm^3$ to 0.955 g/$cm^3$, as determined according to ISO 1183-1:2012 at 23 °C.

In some preferred embodiments of the invention, the first polyolefin, preferably the first polyethylene, has a weight average molecular weight $M_w$ of at least 80 kDa, preferably at least 100 kDa.

In some preferred embodiments of the invention, the first polyolefin, preferably the first polyethylene, has an $M_w/M_n$ of at least 4.0, preferably of at least 4.5, preferably of at least 5.0, preferably of at least 6.0, preferably of at least 7.0, preferably of at least 8.0, preferably of at least 9.0, for example of at least 9.5. In some preferred embodiments of the invention, the first polyolefin, preferably the first polyethylene, has an $M_w/M_n$ of at most 25.0, preferably of at most 20.0, preferably of at most 17.0, preferably of at most 16.0, preferably of at most 15.0, for example of at most 14.0, for example of at most 13.0. The polydispersity index is defined by the ration $M_w/M_n$ of the weight average molecular weight $M_w$ to the number average molecular weight $M_n$ as determined by Size Exclusion Chromatography (SEC) as described herein below in the test methods.

According to the invention, the polyolefin composition, preferably the polyethylene composition, comprises:

b) at least one second polyolefin having a $M_w/M_n$ of at least 10.0, preferably having a long chain branching index $g_{rheo}$ of at least 0.85, preferably wherein the second polyolefin was prepared in the presence of at least one Ziegler-Natta catalyst, wherein said second polyolefin is present in an amount of at least 1.0 % by weight based on the total weight of the polyolefin composition. Preferably the polyethylene composition comprises: b) at least one second polyethylene having a $M_w/M_n$ of at least 10.0, preferably having a long chain branching index $g_{rheo}$ of at least 0.85, preferably wherein

the second polyethylene is prepared in the presence of at least one Ziegler-Natta catalyst, wherein said second polyethylene is present in an amount of at least 1.0 % by weight based on the total weight of the polyethylene composition

In some embodiments, the polyethylene composition comprises at least 1.0 % by weight of the second polyethylene, preferably at least 2.5 %, preferably at least 5.0 %, preferably at least 7.5 % by weight of the second polyethylene, based on the total weight of the polyethylene composition. In some embodiments, the polyethylene composition comprises at most 30.0 % by weight of the second polyethylene, preferably at most 25.0 %, preferably at most 20.0 %, preferably at most 15.0 % by weight of a second polyethylene, based on the total weight of the polyethylene composition. Preferably the polyethylene composition comprises from at least 1.0 % to at most 30.0 % by weight of the second polyethylene, preferably from at least 2.5 % to at most 25.0 %, preferably from at least 5.0 % to at most 20.0 %, preferably from at least 7.5 % to at most 15.0 % by weight of the second polyethylene, based on the total weight of the polyethylene composition.

Preferably, the second polyethylene has a $M_w/M_n$ of at least 10.0, preferably of at least 11.0, preferably of at least 12.0, preferably of at least 13.0, preferably of at least 14.0, preferably of at least 15.0, for example of at least 16.0, for example of at least 17.0. In some embodiments, the second polyethylene has an $M_w/M_n$ of at most 30.0, preferably of at most 25.0, preferably of at most 20.0. In some embodiments, the second polyethylene has an $M_w/M_n$ of at least 10.0 to at most 30.0, preferably of at least 12.0 to at most 25.0, preferably of at least 14.0 to at most 20.0.

Preferably, the second polyethylene has a long chain branching index $g_{rheo}$ of at least 0.85. Preferably, the second polyethylene is prepared in the presence of at least one Ziegler-Natta catalyst.

The second polyolefin may have a multimodal molecular weight distribution. In some embodiments, the second polyolefin is prepared in at least two reactors, which may be separate or coupled to each other in series, wherein each reactor produces a polyolefin with a different weight average molecular weight. For example, the second polyolefin may be a physical or a chemical blend of two Ziegler-Natta polyolefins. In some embodiments, the second polyolefin is a physical blend of at least two polyolefins each having a monomodal molecular weight distribution and each being produced in the presence of at least one Ziegler-Natta catalyst, wherein at least one polyolefin has a high weight average molecular weight and at least one other polyolefin has a low weight average molecular weight, or wherein at least one polyolefin has a higher weight average molecular weight than at least one other polyolefin.

In some preferred embodiments, the second polyolefin comprises a high molecular weight fraction and a low molecular weight fraction, preferably wherein the sum of the high molecular weight fraction and a low molecular weight fraction adds up to 100.0 % by weight based on the total weight of the second polyolefin. In some embodiments, the weight average molecular weight of the high molecular weight fraction is at least 200 kDa, preferably at least 250 kDa, for example about 300 kDa. In some embodiments, the weight average molecular weight of the low molecular weight fraction is at most 40 kDa, preferably most 30 kDa, for example about 25 kDa.

Preferably, the second polyolefin is a second polyethylene and has a bimodal molecular weight distribution. In some embodiments, the second polyethylene has a bimodal molecular weight distribution and is prepared in two reactors connected in series, in the presence of at least one Ziegler-Natta catalyst.

In some preferred embodiments, the second polyethylene has a HLMI of at most 30 g/10 min, for example at most 20 g/10 min, for example at most 10 g/10 min, preferably at most 8 g/10 min, preferably at most 5 g/10 min, with the HLMI being measured according to ISO 1133 condition G at a temperature of 190 °C and under a load of 21.6 kg.

In some embodiments, the second polyethylene has a density of from 0.900 to 0.960 g/cm$^3$, preferably from 0.940 to 0.960 g/cm$^3$, for example from 0.945 to 0.955 g/cm$^3$ as determined according to ISO 1183-1:2012 at 23 °C.

In some preferred embodiments, the second polyethylene has a weight average molecular weight $M_w$ of at least 130 kDa, preferably at least 150 kDa, preferably at least 180 kDa, preferably at least 200 kDa, preferably at least 220 kDa, preferably at least 240 kDa. Molecular weights can be determined by Size Exclusion Chromatography (SEC) as described herein below in the test methods. In some preferred embodiments, the second polyethylene, has a long chain branching index $g_{rheo}$ of at least 0.85, preferably of at least 0.90. In some embodiments, the second polyethylene has a $g_{rheo}$ of at least 0.85 and at most 1.20, preferably of at least 0.90 and at most 1.10

According to the invention, the first polyolefin is produced in the presence of at least one metallocene catalyst. Preferably the first polyolefin is a polyethylene. As used herein, the term "catalyst" refers to a substance that causes a change in the rate of a polymerization reaction. In the present invention, it is especially applicable to catalysts suitable for the polymerization of ethylene to polyethylene. As used herein, the terms "polyolefin produced in the presence of at least one metallocene catalyst", "metallocene-produced polyolefin", or "metallocene polyolefin" are synonymous and are used interchangeably and refer to homo- or co-polymers of polyolefin produced with a catalyst comprising at least one metallocene.

The term "metallocene catalyst" or "metallocene" for short is used herein to describe a metallocene catalyst system comprising any transition metal complexes comprising metal atoms bonded to one or more ligands. The preferred metallocene catalysts are compounds of Group 4 transition metals of the Periodic Table such as titanium, zirconium, hafnium, etc., and have a coordinated structure with a metal compound and ligands composed of one or two groups of cyclopentadienyl, indenyl, fluorenyl or their derivatives. The structure and geometry of the metallocene can be varied to

adapt to the specific need of the producer depending on the desired polymer. Metallocenes typically comprise a single metal site, which allows for more control of branching and molecular weight distribution of the polymer. Monomers are inserted between the metal and the growing chain of polymer.

Preferably the metallocene catalyst system used for preparing the polyolefin, comprises a compound of formula (I) or (II)

$$(Ar)_2MQ_2 \text{ (I); or } R''(Ar)_2MQ_2 \qquad \text{(II)},$$

wherein the metallocenes according to formula (I) are non-bridged metallocenes and the metallocenes according to formula (II) are bridged metallocenes;

wherein said metallocene according to formula (I) or (II) has two Ar bound to M which can be the same or different from each other;

wherein Ar is an aromatic ring, group or moiety and wherein each Ar is independently selected from the group consisting of cyclopentadienyl, indenyl (IND), tetrahydroindenyl (THI), and fluorenyl, wherein each of said groups may be optionally substituted with one or more substituents each independently selected from the group consisting of halogen, hydrosilyl, a hydrocarbyl having 1 to 20 carbon atoms, and $SiR'''_3$ wherein R''' is a hydrocarbyl having 1 to 20 carbon atoms; and wherein said hydrocarbyl optionally contains one or more atoms selected from the group comprising B, Si, S, O, F, Cl, and P;

wherein M is a transition metal selected from the group consisting of titanium, zirconium, hafnium, and vanadium; preferably is selected from the group consisting of titanium, zirconium, and hafnium; and preferably is zirconium;

wherein each Q is independently selected from the group consisting of halogen, a hydrocarboxy having 1 to 20 carbon atoms, and a hydrocarbyl having 1 to 20 carbon atoms and wherein said hydrocarbyl optionally contains one or more atoms selected from the group comprising B, Si, S, O, F, Cl, and P; and

wherein R'' is a divalent group or moiety bridging the two Ar groups and selected from the group consisting of $C_1$-$C_{20}$ alkylene, germanium, silicon, siloxane, alkylphosphine, and an amine, and wherein said R'' is optionally substituted with one or more substituents each independently selected from the group consisting of halogen, hydrosilyl, a hydrocarbyl having 1 to 20 carbon atoms, and $SiR_3$ wherein R is a hydrocarbyl having 1 to 20 carbon atoms; and wherein said hydrocarbyl optionally contains one or more atoms selected from the group comprising B, Si, S, O, F, Cl, and P.

Preferably, the metallocene comprises a bridged bis-indenyl and/or a bridged bis-tetrahydrogenated indenyl component. In some embodiments, the metallocene can be selected from one of the following formulae (IIIa) or (IIIb):

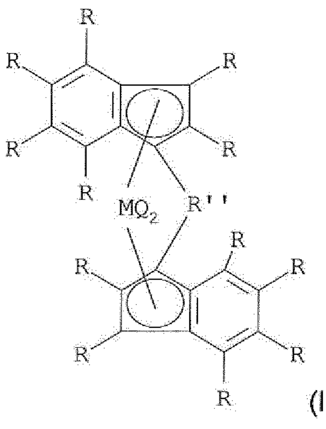
(IIIa)

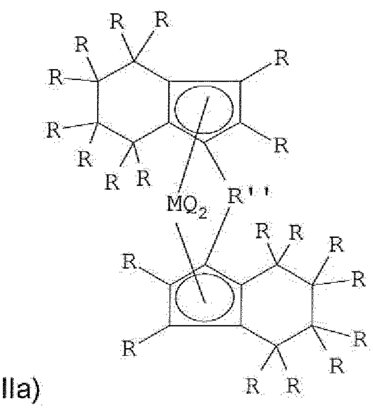
(IIIb)

wherein each R in formula (IIIa) or (IIIb) is the same or different and is selected independently from hydrogen or $XR'_v$ in which X is chosen from Group 14 of the Periodic Table (preferably carbon), oxygen or nitrogen and each R' is the same or different and is chosen from hydrogen or a hydrocarbyl of from 1 to 20 carbon atoms, and v+1 is the valence of X, preferably R is a hydrogen, methyl, ethyl, n-propyl, iso-propyl, n-butyl, tert-butyl group; R'' is a structural bridge

between the two indenyl or tetrahydrogenated indenyls that comprises a $C_1$-$C_4$ alkylene radical, a dialkyl germanium, silicon or siloxane, or an alkyl phosphine or amine radical; Q is a hydrocarbyl radical having from 1 to 20 carbon atoms or a halogen, preferably Q is F, Cl or Br; and M is a transition metal from Group 4 of the Periodic Table or vanadium; preferably wherein M is a transition metal from Group 4, preferably wherein M is zirconium;.

Each indenyl or tetrahydro indenyl component may be substituted with R in the same way or differently from one another at one or more positions of either of the fused rings. Each substituent is independently chosen. If the cyclopentadienyl ring is substituted, its substituent groups are preferably not so bulky so as to affect coordination of the olefin monomer to the metal M. Any substituents $XR'_v$ on the cyclopentadienyl ring are preferably methyl. More preferably, at least one and most preferably both cyclopentadienyl rings are unsubstituted. In a particularly preferred embodiment, the metallocene comprises a bridged unsubstituted bis-indenyl and/or bis-tetrahydrogenated indenyl i.e. all R are hydrogens. More preferably, the metallocene comprises a bridged unsubstituted bis-tetrahydrogenated indenyl.

Illustrative examples of metallocene catalysts comprise but are not limited to bis(cyclopentadienyl) zirconium dichloride ($Cp_2ZrCl_2$), bis(cyclopentadienyl) titanium dichloride ($Cp_2TiCl_2$), bis(cyclopentadienyl) hafnium dichloride ($Cp_2HfCl_2$); bis(tetrahydroindenyl) zirconium dichloride, bis(indenyl) zirconium dichloride, and bis(n-butyl-cyclopentadienyl) zirconium dichloride; ethylenebis(4,5,6,7-tetrahydro-1-indenyl) zirconium dichloride, ethylenebis(1-indenyl) zirconium dichloride, dimethylsilylene bis(2-methyl-4-phenyl-inden-1-yl) zirconium dichloride, diphenylmethylene (cyclopentadienyl)(fluoren-9-yl) zirconium dichloride, and dimethylmethylene [1-(4-tert-butyl-2-methyl-cyclopentadienyl)](fluoren-9-yl) zirconium dichloride. Most preferably the metallocene is ethylene-bis(tetrahydroindenyl)zirconium dichloride or ethylene-bis(tetrahydroindenyl) zirconium difluoride.

As used herein, the term "hydrocarbyl having 1 to 20 carbon atoms" refers to a moiety selected from the group comprising a linear or branched $C_1$-$C_{20}$ alkyl; $C_3$-$C_{20}$ cycloalkyl; $C_6$-$C_{20}$ aryl; $C_7$-$C_{20}$ alkylaryl and $C_7$-$C_{20}$ arylalkyl, or any combinations thereof. Exemplary hydrocarbyl groups are methyl, ethyl, propyl, butyl, amyl, isoamyl, hexyl, isobutyl, heptyl, octyl, nonyl, decyl, cetyl, 2-ethylhexyl, and phenyl.

As used herein, the term "hydrocarboxy having 1 to 20 carbon atoms" refers to a moiety with the formula hydrocarbyl-O-, wherein the hydrocarbyl has 1 to 20 carbon atoms as described herein. Preferred hydrocarboxy groups are selected from the group comprising alkyloxy, alkenyloxy, cycloalkyloxy or aralkoxy groups.

As used herein, the term "alkyl", by itself or as part of another substituent, refers to straight or branched saturated hydrocarbon group joined by single carbon-carbon bonds having 1 or more carbon atom, for example 1 to 12 carbon atoms, for example 1 to 6 carbon atoms, for example 1 to 4 carbon atoms. When a subscript is used herein following a carbon atom, the subscript refers to the number of carbon atoms that the named group may contain. Thus, for example, $C_{1-12}$alkyl means an alkyl of 1 to 12 carbon atoms. Examples of alkyl groups are methyl, ethyl, propyl, isopropyl, butyl, isobutyl, *sec*-butyl, *tert*-butyl, 2-methylbutyl, pentyl and its chain isomers, hexyl and its chain isomers, heptyl and its chain isomers, octyl and its chain isomers, nonyl and its chain isomers, decyl and its chain isomers, undecyl and its chain isomers, dodecyl and its chain isomers. Alkyl groups have the general formula $C_nH_{2n+1}$.

As used herein, the term "cycloalkyl", by itself or as part of another substituent, refers to a saturated or partially saturated cyclic alkyl radical. Cycloalkyl groups have the general formula $C_nH_{2n-1}$. When a subscript is used herein following a carbon atom, the subscript refers to the number of carbon atoms that the named group may contain. Thus, examples of $C_{3-6}$cycloalkyl include cyclopropyl, cyclobutyl, cyclopentyl, or cyclohexyl.

As used herein, the term "aryl", by itself or as part of another substituent, refers to a radical derived from an aromatic ring, such as phenyl, naphthyl, indanyl, or 1,2,3,4-tetrahydro-naphthyl. When a subscript is used herein following a carbon atom, the subscript refers to the number of carbon atoms that the named group may contain.

As used herein, the term "alkylaryl", by itself or as part of another substituent, refers to refers to an aryl group as defined herein, wherein a hydrogen atom is replaced by an alkyl as defined herein. When a subscript is used herein following a carbon atom, the subscript refers to the number of carbon atoms that the named group or subgroup may contain.

As used herein, the term "arylalkyl", by itself or as part of another substituent, refers to refers to an alkyl group as defined herein, wherein a hydrogen atom is replaced by an aryl as defined herein. When a subscript is used herein following a carbon atom, the subscript refers to the number of carbon atoms that the named group may contain. Examples of $C_{6-10}$aryl$C_{1-6}$alkyl radicals include benzyl, phenethyl, dibenzylmethyl, methylphenylmethyl, 3-(2-naphthyl)-butyl, and the like.

As used herein, the term "alkylene", by itself or as part of another substituent, refers to alkyl groups that are divalent, i.e. with two single bonds for attachment to two other groups. Alkylene groups may be linear or branched and may be substituted as indicated herein. Non-limiting examples of alkylene groups include methylene ($-CH_2-$), ethylene ($-CH_2-CH_2-$), methylmethylene ($-CH(CH_3)-$), 1-methylethylene ($-CH(CH_3)-CH_2-$), n-propylene ($-CH_2-CH_2-CH_2-$), 2-methylpropylene ($-CH_2-CH(CH_3)-CH_2-$), 3-methylpropylene ($-CH_2-CH_2-CH(CH_3)-$), n-butylene ($-CH_2-CH_2-CH_2-CH_2-$), 2-methylbutylene ($-CH_2-CH(CH_3)-CH_2-CH_2-$), 4-methylbutylene ($-CH_2-CH_2-CH_2-CH(CH_3)-$), pentylene and its chain isomers, hexylene and its chain isomers, heptylene and its chain isomers, octylene and its chain isomers, nonylene and its chain isomers, decylene and its chain isomers, undecylene and its chain isomers, dodecylene and its chain isomers.

When a subscript is used herein following a carbon atom, the subscript refers to the number of carbon atoms that the named group may contain. For example, $C_1$-$C_{20}$ alkylene refers to an alkylene having between 1 and 20 carbon atoms.

Exemplary halogen atoms include chlorine, bromine, fluorine and iodine, wherein fluorine and chlorine are preferred.

The metallocene catalysts used herein are preferably provided on a solid support. The support can be an inert organic or inorganic solid, which is chemically unreactive with any of the components of the conventional metallocene catalyst. Suitable support materials for the supported catalyst include solid inorganic oxides, such as silica, alumina, magnesium oxide, titanium oxide, thorium oxide, as well as mixed oxides of silica and one or more Group 2 or 13 metal oxides, such as silica-magnesia and silica-alumina mixed oxides. Silica, alumina, and mixed oxides of silica and one or more Group 2 or 13 metal oxides are preferred support materials. Preferred examples of such mixed oxides are the silica-aluminas. Most preferred is a silica compound. In some preferred embodiments, the metallocene catalyst is provided on a solid support, preferably a silica support. The silica may be in granular, agglomerated, fumed or other form.

In some embodiments, the support of the metallocene catalyst is a porous support, and preferably a porous silica support. In some embodiments the porous silica support has a surface area comprised between 200 $m^2$/g and 900 $m^2$/g. In some embodiments, the support of the polymerization catalyst is a porous support, and preferably a porous silica support having an average pore volume comprised between 0.5 and 4.0 ml/g. In yet another embodiment, the support of the polymerization catalyst is a porous support, preferably as described in US2013/0211018 A1, hereby incorporated in its entirety by reference. In some embodiments, the support of the polymerization catalyst is a porous support, and preferably a porous silica support having an average pore diameter comprised between 50 Å and 300 Å, and preferably between 75 Å and 220 Å.

In some embodiments, the support has a D50 of at most 150 μm, preferably of at most 100 μm, preferably of at most 75 μm, preferably of at most 50 μm, preferably of at most 25 μm, preferably of at most 15 μm, preferably of at most 10 μm, preferably of at most 8 μm. The D50 is defined as the particle size for which fifty percent by weight of the particles has a size lower than the D50. The measurement of the particle size can be made according to the International Standard ISO 13320:2009 ("Particle size analysis - Laser diffraction methods"). For example, the D50 can be measured by sieving, by BET surface measurement, or by laser diffraction analysis. For example, Malvern Instruments' laser diffraction systems may advantageously be used. The particle size may be measured by laser diffraction analysis on a Malvern type analyzer. The particle size may be measured by laser diffraction analysis on a Malvern type analyzer after having put the supported catalyst in suspension in cyclohexane. Suitable Malvern systems include the Malvern 2000, Malvern MasterSizer (such as MasterSizer S), Malvern 2600 and Malvern 3600 series. Such instruments together with their operating manual meet or even exceed the requirements set-out within the ISO 13320:2009 Standard. The Malvern MasterSizer (such as MasterSizer S) may also be useful as it can more accurately measure the D50 towards the lower end of the range e.g. for average particle sizes of less than 8 μm, by applying the theory of Mie, using appropriate optical means.

Preferably, the supported metallocene catalyst is activated. The cocatalyst, which activates the metallocene catalyst component, can be any cocatalyst known for this purpose such as an aluminium-containing cocatalyst, a boron-containing cocatalyst or a fluorinated catalyst. The aluminium-containing cocatalyst may comprise an alumoxane, an alkyl aluminium, a Lewis acid and/or a fluorinated catalytic support.

In some embodiments, alumoxane is used as an activating agent for the metallocene catalyst. The alumoxane can be used in conjunction with a catalyst in order to improve the activity of the catalyst during the polymerization reaction. As used herein, the term "alumoxane" and "aluminoxane" are used interchangeably, and refer to a substance, which is capable of activating the metallocene catalyst. In some embodiments, alumoxanes comprise oligomeric linear and/or cyclic alkyl alumoxanes. In a further embodiment, the alumoxane has formula (IV) or (V)

$R^a$-(Al($R^a$)-O)$_x$-Al$R^a_2$ (IV) for oligomeric, linear alumoxanes; or

(-Al($R^a$)-O-)$_y$ (V) for oligomeric, cyclic alumoxanes

wherein x is 1-40, and preferably 10-20;

wherein y is 3-40, and preferably 3-20; and

wherein each $R^a$ is independently selected from a $C_1$-$C_8$alkyl, and preferably is methyl. In some preferred embodiments, the alumoxane is methylalumoxane (MAO).

In some preferred embodiments, the metallocene catalyst is a supported metallocene-alumoxane catalyst comprising at least one metallocene and an alumoxane which are bound on a porous silica support. Preferably, the metallocene catalyst is a bridged bis-indenyl catalyst and/or a bridged bis-tetrahydrogenated indenyl catalyst.

One or more aluminiumalkyl represented by the formula Al$R^b_x$ can be used as additional co-catalyst, wherein each $R^b$ is the same or different and is selected from halogens or from alkoxy or alkyl groups having from 1 to 12 carbon atoms and x is from 1 to 3. Non-limiting examples are Tri-Ethyl Aluminum (TEAL), Tri-Iso-Butyl Aluminum (TIBAL), Tri-Methyl Aluminum (TMA), and Methyl-MethylEthyl Aluminum (MMEAL). Especially suitable are trialkylaluminiums, the most preferred being triisobutylaluminium (TIBAL) and triethylaluminum (TEAL).

In some preferred embodiments, the second polyolefin is produced in the presence of at least one Ziegler-Natta catalyst. As used herein the terms "polyolefin produced in the presence of at least one Ziegler-Natta catalyst", "Ziegler-Natta-produced polyolefin", or "Ziegler-Natta polyolefin" are synonymous and are used interchangeably and refers to homo- or co-polymer of polyolefin produced with a Ziegler-Natta catalyst system.

The term "Ziegler-Natta catalyst" or "ZN catalyst" refers to catalyst systems comprising catalysts having a general formula $M^1X_v$, wherein $M^1$ is a transition metal compound selected from Group 4 to 7 from the periodic table of elements, wherein X is a halogen, and wherein v is the valence of the metal. Preferably, $M^1$ is a Group 4, Group 5, or Group 6 metal, more preferably titanium, chromium or vanadium and most preferably titanium. Preferably, X is chlorine or bromine, and most preferably, chlorine. Illustrative examples of the transition metal compounds comprise but are not limited to $TiCl_3$ and $TiCl_4$. Suitable Ziegler-Natta catalysts for use in the invention are described in US6930071 and US6864207, which are incorporated herein by reference. A suitable Ziegler-Natta catalyst system can comprise a titanium compound having at least one titanium-halogen bond and an internal electron donor, both on a suitable support (for example on a magnesium halide in active form), an organoaluminium compound (such as an aluminium trialkyl), and an optional external donor. Preferably, the Ziegler-Natta catalyst used for the preparation of the second polyethylene resin has an average particle size (D50) of at most 20 μm. In some embodiments, the Ziegler-Natta catalyst has an average particle size distribution D50 of at least 3 μm. In some embodiments, the Ziegler-Natta catalyst has an average particle size distribution D50 of at most 15 μm, preferably at most 13 μm, preferably at most 10 μm, preferably at most 8 μm, for example at most 5 μm, for example at least 3 μm and of at most 15μm. The D50 is defined as the particle size for which fifty percent by volume of the particles has a size lower than the D50. The D50 can be measured by laser diffraction analysis on a Malvern type analyzer after having put the supported catalyst in suspension in cyclohexane, as described herein above for the metallocene support.

In some embodiments, the Ziegler-Natta produced polyolefin, is a Ziegler-Natta produced polyethylene. As used herein the terms "polyethylene produced in the presence of at least one Ziegler-Natta catalyst" or "Ziegler-Natta-produced polyethylene" are synonymous and are used interchangeably and refers to homo- or co-polymer of polyethylene produced with at least one Ziegler-Natta catalyst system. In some preferred embodiments, the second polyolefin is a multimodal polyolefin prepared in the presence of at least one Ziegler-Natta catalyst. For example, the second polyolefin can be a bimodal polyethylene prepared in the presence of at least one Ziegler-Natta catalyst.

The invention relates to a polyolefin composition, preferably a polyethylene composition. In some preferred embodiments, the polyethylene composition has an $M_w/M_n$ ratio of at least 8.0, and preferably of at least 9.0.

In some preferred embodiments, the polyolefin composition, preferably the polyethylene composition, has a HLMI of at least 5 g/10 min, for example at least 6 g/10 min, for example at least 7 g/10 min, preferably at least 8 g/10 min, for example at least 8 g/10 min and at most 12 g/10 min, for example about 10 g/10 min, with the HLMI being measured according to ISO 1133 condition G at a temperature of 190 °C and under a load of 21.6 kg. A polyolefin composition having these characteristics is particularly suitable for pipe applications.

In some embodiments, the polyolefin composition comprises one or more additives. In some embodiments, the additives can be selected from the group comprising an antioxidant, an antiacid, a UV-absorber, an antistatic agent, a light stabilizing agent, an acid scavenger, a lubricant, a nucleating/clarifying agent, a colorant or peroxide. An overview of suitable additives may be found in Plastics Additives Handbook, ed. H. Zweifel, 5th edition, 2001, Hanser Publishers, which is hereby incorporated by reference in its entirety.

In some embodiments, the polyolefin composition comprises from 0.0 % to 10.0 % by weight of at least one additive, based on the total weight of the polyolefin composition. In some preferred embodiments, said polyolefin composition comprises at most 5.0 % by weight of additive, based on the total weight of the polyolefin composition, for example from 0.1 % to 3.0 % by weight of additive, based on the total weight of the polyolefin composition.

In some preferred embodiments, the polyolefin composition comprises an antioxidant. Non-limiting examples of suitable antioxidants include, for example, phenolic antioxidants such as pentaerythritol tetrakis[3-(3',5'-di-tert-butyl-4'-hydroxyphenyl)propionate] (herein referred to as Irganox 1010), tris(2,4-ditert-butylphenyl) phosphite (herein referred to as Irgafos 168), 3DL-alpha-tocopherol, 2,6-di-tert-butyl-4-methylphenol, dibutylhydroxyphenylpropionic acid stearyl ester, 3,5-di-tert-butyl-4-hydroxyhydrocinnamic acid, 2,2'-methylenebis(6-tert-butyl-4-methyl-phenol), hexamethylene bis[3-(3,5-di-tert-butyl-4-hydroxyphenyl)propionate], benzenepropanamide,N,N'-1,6-hexanediyl bis[3,5-bis(1,1-dimethylethyl)-4-hydroxy] (herein referred to as Antioxidant 1098), diethyl 3.5-di-tert-butyl-4-hydroxybenzyl phosphonate, calcium bis[monoethyl(3,5-di-tert-butyl-4-hydroxylbenzyl)phosphonate], triethylene glycol bis(3-tert-butyl-4-hydroxy-5-methylphenyl)propionate (Antioxidant 245), 6,6'-di-tert-butyl-4,4'-butylidenedi-m-cresol, 3,9-bis(2-(3-(3-tert-butyl-4-hydroxy-5-methylphenyl)propionyloxy-1,1-dimethylethyl)-2,4,8,10-tetraoxaspiro[5.5]undecane, 1,3,5-trimethyl-2,4,6-tris(3,5-di-tert-butyl-4-hydroxybenzyl)benzene, 1,1,3-tris(2-methyl-4-hydroxy-5-tert-butylphenyl)butane, (2,4,6-trioxo-1,3,5-triazine-1,3,5(2H,4H,6H)-triyl)triethylene tris[3-(3,5-di-tert-butyl-4-hydroxyphenyl)propionate], tris(3,5-di-tert-butyl-4-hydroxybenzyl) isocyanurate, tris(4-tert-butyl-3-hydroxy-2,6-dimethylbenzyl) isocyanurate, ethylene bis[3,3-bis(3-tert-butyl-4-hydroxyphenyl)butyrate], and 2,6-bis[[3-(1,1-dimethylethyl)-2-hydroxy-5-methylphenyl] octahydro-4,7-methano-1H-indenyl]-4-methyl-phenol. Suitable antioxidants also include, for example, phenolic antioxidants with dual functionality such 4,4'-thio-bis(6-tert-butyl-m-methyl phenol) (herein referred to as Antioxidant 300), 2,2'-sulfanediylbis(6-tert-butyl-4-methylphenol) (herein referred to as Antioxidant 2246-S), 2-methyl-4,6-bis(octylsulfanylmethyl)phenol, thiodiethylene bis[3-(3,5-di-tert-butyl-4-hydroxyphenyl)propionate], 2,6-di-tert-butyl-4-(4,6-bis(octylthio)-1,3,5-triazin-2-ylamino)phenol, N-(4-hydroxyphenyl)stearamide, bis(1,2,2,6,6-pentamethyl-4-piperidyl) [[3,5-bis(1,1-dimethylethyl)-4-hydroxyphenyl]methyl]butylmalonate, 2,4-di-tert-butylphenyl 3,5-di-tert-butyl-4-hydroxybenzoate, hexadecyl 3,5-di-tert-butyl-4-hydroxy-benzoate, 2-(1,1-dimethylethyl)-6-[[3-(1,1-dimethylethyl)-2-hydroxy-5-methylphenyl] methyl]-4-methylphenyl acrylate, and Cas nr. 128961-68-2 (herein referred to as Sumilizer GS). Suitable antioxidants also include, for example, amine antioxidants such as N-phenyl-2-naphthylamine, poly(1,2-dihydro-2,2,4-trimethyl-quinoline), N-isopropyl-N'-phenyl-p-phenylenediamine, N-phenyl-1-naphthylamine, CAS nr. 68411-46-1 (herein referred to as Antioxidant 5057), and 4,4-bis(alpha,alpha-dimethylbenzyl)diphenylamine (herein referred to as Antioxidant KY 405). In some preferred embodiments, the antioxidant is selected from pentaerythritol tetrakis[3-(3',5'-di-tert-butyl-4'-hydroxyphenyl)propionate] (herein referred to as Irganox 1010), tris(2,4-ditert-butylphenyl) phosphite (herein referred to as Irgafos 168), or a mixture thereof. According to a second aspect, the invention encompasses formed articles comprising the polyolefin composition according to the first aspect of the invention. Preferred articles are pipes, caps and closures, films, fibers, sheets, containers, foams, rotomoulded articles, and injection moulded articles. In some embodiments, the formed article is a film. In some embodiments, the formed article is a pipe. In some embodiments, the formed article is a cap or closure.

According to a third aspect, the invention encompasses a process for preparing the polyolefin composition, comprising the steps of:

(A) providing at least one first polyolefin having a multimodal molecular weight distribution and prepared in the presence of at least one metallocene catalyst;

(B) providing at least one second polyolefin having a $M_w/M_n$ of at least 10.0, wherein said second polyolefin is present in an amount of at least 1.0 % by weight based on the total weight of the polyolefin composition; and

(C) blending said at least one first polyolefin, with said second polyolefin to obtain the polyolefin composition.

Most preferably, the second polyolefin has a High Load Melt Index HLMI of at least 0.60 times the High Load Melt Index HLMI of the first polyolefin and of at most 1.40 times the High Load Melt Index HLMI of the first polyolefin, preferably of at least 0.65 times the High Load Melt Index HLMI of the first polyolefin and of at most 1.35 times the High Load Melt Index HLMI of the first polyolefin, preferably of at least 0.70 times the High Load Melt Index HLMI of the first polyolefin and of at most 1.30 times the High Load Melt Index HLMI of the first polyolefin, as measured following the procedure of ISO 1133 condition G using a temperature of 190 °C and a load of 21.6 kg. Preferably, the first polyolefin comprises a high molecular weight component and a low molecular weight component, wherein the weight average molecular weight $M_w$ of the first polyolefin is lower than the weight average molecular weight $M_w$ of the second polyolefin, and wherein the weight average molecular weight $M_w$ of the second polyolefin, is lower than the weight average molecular weight $M_w$ of the high molecular weight component of the first polyolefin.

In some embodiments, the process according to the third aspect of the invention is for preparing a polyolefin composition according to the first aspect of the invention, or an embodiment thereof. The first polyolefin, second polyolefin, and polyolefin composition can be as defined above.

In some embodiments, step (C) is performed in the absence of a solvent.

The present process is particularly advantageous as it is simple and may not require additional compounds, such as for example compatibilizers. Hence, in some embodiments, the process for preparing the polyolefin composition according to the present invention is preferably performed in the absence of a compatibilizer.

The term "polyethylene resin" as used herein refers to the polyethylene fluff or powder that is extruded, and/or melted, and/or pelleted and can be prepared through compounding and homogenizing of the polyethylene resin as taught herein, for instance, with mixing and/or extruder equipment. The term "fluff" or "powder" as used herein refers to the polyethylene material with the hard catalyst particle at the core of each grain and is defined as the polymer material after it exits the polymerization reactor (or final polymerization reactor in the case of multiple reactors connected in series). The term "pellets" refers to the polyethylene resin that has been pelletized, for example through melt extrusion. The process of pelletization preferably comprises several devices connected in series, including one or more rotating screws in an extruder, a die, and means for cutting the extruded filaments into pellets.

Preferably, the polyolefin compositions are processed at a temperature above the melt temperature, i.e. they are melt-processed. In some preferred embodiments, the process further comprises the step of:

(D) processing the polyolefin composition obtained in step (C) at a temperature above the melt temperature of said polyolefin composition; wherein step (D) preferably comprises extruding a mixture comprising the first polyolefin and the second polyolefin in an extruder.

Said melt-processing step (D) can for example be a pelletization, i.e. the production of pellets by melt-extruding the polyolefin composition, or step (D) can be a process selected from the group comprising fiber extrusion, film extrusion,

sheet extrusion, pipe extrusion, blow molding, rotomoulding, slush molding, injection molding, injection-stretch blow molding and extrusion-thermoforming. Most preferably, step (D) is a process selected from the group comprising pelletization, fiber extrusion, film extrusion, sheet extrusion and rotomoulding.

The present process preferably comprises an extrusion. Preferably the polyolefin composition is pelletized. The process preferably comprises several equipments connected in series, including one or more rotating screws in at least one extruder, a die, and means for cutting the extruded filaments into pellets.

Preferably, polyolefin composition is fed to an extruding apparatus through a valve, preferably a feeding screw or a rotary valve, and conveyed - while passing a flow meter - to the at least one feeding zone of the extrusion apparatus. Preferably, nitrogen is provided in the feeding zone to prevent air from entering the extrusion apparatus, to thereby limit polyolefin degradation. After being fed into the extruder, the polyolefin composition is preferably transported along with the rotating screw of the extruder. High shear forces are present in the extruder and product temperature increases. The polyolefin composition, optionally in the presence of additives, melts and is homogenized and mixed. The extruder can have one or more heating means e.g. a jacket to heat the extruder barrels or a hot oil unit. The screw in the extruder can be the vehicle upon which the polyolefin composition travels. The shape of the screw can determine, along with the speed at which the screw turns, expressed in rpm, the speed at which the product moves and the pressure attained in the extruder. The screw in the screw mixer can be powered by a motor, preferably an electric motor. In some preferred embodiments, the extruder has a screw speed from 10 rpm to 2000 rpm, for example from 100 rpm to 1000 rpm, for example from 150 rpm to 300 rpm. The melted and homogenized polyolefin composition may further be pumped and pressurized by a pump at the end of the extruder, preferably powered by an electrical motor. Preferably, the melted polyolefin composition is further filtered by means of a filter to remove impurities and to reduce the amount of gels. Preferably, the composition is then pushed through a die, preferably a die plate, provided in a pelletizer. In some embodiments, the polyolefin comes out of the die plate as a large number of noodles which are then delivered into pellet cooling water and cut underwater in the pelletizer by rotating knives. The particles can be cooled down with the water and form the pellets which are transported to further processing sections, e.g. to a packaging section.

The polyolefin compositions of the present invention are preferably characterized by a decreased multimodal or bimodal dispersion, and therefore, decreased gel formation. The advantages of the present invention are illustrated by the following non-limiting examples.

**EXAMPLES AND TEST METHODS**

As used herein, bimodal dispersion is defined as the percentage area of nodules, in this case high molecular weight LLDPE nodules. Distribution of nodules in the polyolefin composition was determined based on standard ISO 18553:2002. A slice of the polyolefin composition was cut up into a thin section after extrusion using a razor blade. The thin section was melted between two microscopic slides and then pressed under compression. The thickness of the slice was comprised between 40 $\mu$m and 100 $\mu$m, preferably 60 $\mu$m. An area of about 2.0 to 2.5 $mm^2$ was then checked optically for the presence of any agglomerated nodules. The microscope used was an Olympus BH2, with an Olympus 5X objective and a Nikon camera. For a first inspection, a Leica DLMP microscope with transmitted polarized light and a Leica DFC495 camera were used. When apparent improvement in bimodal dispersion was expected, it was quantified with the Olympus BH2 optical system.

The density of the polyolefin was measured by hydrostatic balance, according to ISO 1183-1:2012 at a temperature of 23 °C. For polyolefins, HLMI was determined according to ISO 1133, condition G at a temperature of 190 °C and under a load of 21.6 kg. For polyolefins, $MI_5$ was determined according to ISO 1133, condition T at a temperature of 190 °C and under a load of 5.00 kg.

The molecular weights ($M_n$ (number average molecular weight), $M_w$ (weight average molecular weight), $M_z$ (z-average molecular weight)) and molecular weight distributions D ($M_w/M_n$), and D' ($M_z/M_w$) were determined by size exclusion chromatography (SEC) and in particular by gel permeation chromatography (GPC). The molecular weight distribution (MWD) (polydispersity) is calculated as $M_w/M_n$. A GPC-IR5 from Polymer Char was used: 10 mg polyethylene sample was dissolved at 160 °C in 10 ml of trichlorobenzene for 1 hour. Injection volume: about 400 $\mu$l, automatic sample preparation and injection temperature: 160 °C. Column temperature: 145 °C. Detector temperature: 160 °C. Two Shodex AT-806MS (Showa Denko) and one Styragel HT6E (Waters) columns were used with a flow rate of 1 ml/min. Detector: Infrared detector (2800-3000$cm^{-1}$). Calibration: narrow standards of polystyrene (PS) (commercially available). Calculation of molecular weight $M_i$ of each fraction i of eluted polyethylene was based on the Mark-Houwink relation ($\log_{10}(M_{PE}) = 0.965909 \times \log_{10}(M_{PS}) - 0.28264$) (cut off on the low molecular weight end at $M_{PE}$ =1000).

The molecular weight averages used in establishing molecular weight/property relationships are the number average ($M_n$), weight average ($M_w$) and z-average ($M_z$) molecular weight. These averages are defined by the following expressions and are determined form the calculated $M_i$:

$$M_n = \frac{\sum_i N_i M_i}{\sum_i N_i} = \frac{\sum_i W_i}{\sum_i W_i / M_i} = \frac{\sum_i h_i}{\sum_i h_i / M_i}$$

$$M_w = \frac{\sum_i N_i M_i^2}{\sum_i N_i M_i} = \frac{\sum_i W_i M_i}{\sum_i W_i} = \frac{\sum_i h_i M_i}{\sum_i h_i}$$

$$M_z = \frac{\sum_i N_i M_i^3}{\sum_i N_i M_i^2} = \frac{\sum_i W_i M_i^2}{\sum_i W_i M_i} = \frac{\sum_i h_i M_i^2}{\sum_i h_i M_i}$$

Here, $N_i$ and $W_i$ are the number and weight, respectively, of molecules having molecular weight Mi. The third representation in each case (farthest right) defines how one may obtain these averages from SEC chromatograms. Here, $h_i$ is the height (from baseline) of the SEC curve at the $i^{th}$ elution fraction and $M_i$ is the molecular weight of species eluting at this increment.

Rheology long chain branching index $g_{rheo}$ was measured according to the formula, as described in WO 2008/113680: $g_{rheo}(PE) = M_w(SEC)/M_w(\eta_0, MWD, SCB)$
wherein $M_w$ (SEC) is the weight average molecular weight obtained from size exclusion chromatography expressed in kDa;
and wherein $M_w$ ($\eta_0$, MWD, SCB) is determined according to the following, also expressed in kDa: $Mw(\eta_0, MWD, SCB) = exp(1.7789 + 0.199769 \text{ Ln } M_n + 0.209026 (\text{Ln } \eta_0) + 0{,}955 (\text{ln } \rho) - 0.007561 (\text{ln } M_z) (\text{Ln } \eta_0) + 0.02355 (\text{ln } M_z)^2)$
Number- and z-average molecular weights, $M_n$ and $M_z$ expressed in kDa, are obtained from size exclusion chromatography; density ρ is measured in g/cm$^3$ and measured according to ISO 1183-1:2012 at a temperature of 23 °C; the zero shear viscosity $\eta_0$ in Pa.s is obtained from a frequency sweep experiment combined with a creep experiment, in order to extend the frequency range to values down to $10^{-4}$ $s^{-1}$ or lower, and taking the usual assumption of equivalence of angular frequency (rad/s) and shear rate; wherein zero shear viscosity $\eta_0$ is estimated by fitting with Carreau-Yasuda flow curve (η-W) at a temperature of 190 °C, obtained by oscillatory shear rheology on ARES-G2 equipment (manufactured by TA Instruments) in the linear viscoelasticity domain; wherein circular frequency (W in rad/s) varies from 0.05-0.1 rad/s to 250-500 rad/s, typically 0.1 to 250 rad/s, and the shear strain is typically 10 %. In practice, the creep experiment is carried out at a temperature of 190 °C under a nitrogen atmosphere with a stress level such that after 1200 s the total strain is less than 20 %; wherein the apparatus used is an AR-G2 manufactured by TA instruments.

The intrinsic viscosity inferred from rheology can thus be expressed using the Carreau-Yasuda equation: $\eta=\eta_0/(1+(W^*\tau)^b)^{(1-n)/b)}$ wherein parameters τ, b and n are fitting parameters called respectively 'relaxation time', 'breadth parameter' and 'power-law parameter', which are obtained using non-linear regression with standard software such as SigmaPlot® version 10 or the Excel® Solver function. From this $\eta_0$ in Pa.s can thus be obtained and used in the equation for Mw ($\eta_0$, MWD, SCB) provided above.

The slow crack growth resistance of the resins was tested by a full notch creep test (FNCT) according to ISO 16770:2004 condition B in which the time for failure was recorded for a circumferentially notched (1600 μm depth) specimen having a 10 mm x 10 mm cross section, taken from compressed-plates (compression from the melt at a cooling rate of 2 °C/min). According, to ISO 16770:2004 condition B the specimens are placed in a surfactant solution of 2 wt% (in water) Arkopal N100, at a temperature of 80 °C, for an extended period of time, and subjected to a tensile stress equal to 4 MPa. To be qualified as "RC", the pipe must resist more than one year (8760 h) in 2.0 wt% Arkopal N100 (also known under the name Igepal C0530), at 80 °C under a 4.0 MPa constraint.

For all tested resins, a variant of the FNCT test was used wherein, instead of Arkopal N100, the specimens were placed in a surfactant solution of 0.5 wt% (in water) Maranil ® Paste A 55 from Cognis (sodium dodecylbenzenesulfonate, CAS 68411-30-3), at a temperature of 80 °C, and subjected to a tensile stress equal to 4 MPa. From a comparison of break times obtained with the same sample measured in Arkopal 100 and in Maranil A55 (with previous described conditions), there is a two to three acceleration factor for Maranyl A55 (when measured at 80 °C and imposing 4MPa) with respect to failure times with Arkopal N100. Furthermore, surfactant solutions with Maranyl A55 are much more stable than those with Arkopal 100 at those elevated temperatures (F.L. Scholten, D. Gueugnaut and F. Berthier, "A more reliable detergent for cone and full notch creep testing of PE materials", Proceedings of Plastic Pipes XI Münich, Germany, 3rd-6th September 2001 and D. Gueugnaut, F. Berthier, and D. Rousselot, "Using alkylbenzene sulphonates-based chemicals to go over the inefficiency of the current surfactants and to get more rapid and reliable evaluation of E.S.C. Resistance of PE resins", 17th International Plastic Fuel Gas Pipe Symposium, San Francisco October 20-23, 2002).

Material description

Polyethylene A: was a bimodal polyethylene prepared in a double loop reactor in the presence of an ethylene-bis(tetrahydroindenyl) zirconium dichloride metallocene catalyst system. The polymerization was carried out in a double loop reactor comprising 2 reactors Rx1 and Rx2. Polymerization was carried at a temperature of 95 °C under a pressure of about 40 bars in Rx1 and at a temperature of 85 °C under a pressure of about 40 bars in Rx2. Information regarding the polymerization conditions in Rx1 and Rx2 can be found in Table 1. The characteristics of polyethylene A can be found in Table 2. Polyethylene A is similar in composition to the metallocene bimodal polyolefin reported in US2002/0065368.

Table 1

| Polyethylene A | | | |
|---|---|---|---|
| First reactor (Rx1) operating conditions | Pressure | (bar) | 42 |
| | Temperature | (°C) | 95 |
| | Ethylene | (kg/h) | 18 |
| | Comonomer | (kg/h) | 0 |
| | $H_2$ | (Nl/h) | 44 |
| | $M_w$ | (kDa) | 23 |
| | $MI_2$ | (g/10min) | 268.5 |
| | Contribution | (wt%) | 48.8 |
| Second reactor (Rx2) operating conditions | Pressure | (bar) | 40 |
| | Temperature | (°C) | 85 |
| | Ethylene | (kg/h) | 22 |
| | Comonomer | (kg/h) | 1.8 |
| | $H_2$ | (Nl/h) | 0 |

Table 2

| | |
|---|---|
| $MI_5$ (g/10min) | 0.34 |
| HLMI (g/10min) | 10.9 |
| Density (g/cm$^3$) | 0.949 |
| $M_n$ (kDa) | 16.8 |
| $M_w$ (kDa) | 165.5 |
| $M_z$ (kDa) | 623.0 |
| D ($M_w/M_n$) | 9.9 |
| D'($M_z/M_w$) | 3.8 |
| $g_{rheo}$ | 0.67 |

The value of $g_{rheo}$ 0.67 indicates that the bimodal metallocene polyethylene contains long chain branching, LCB. A lower value of $g_{rheo}$ corresponds to a higher amount of LCB. For linear polyethylene $g_{rheo}$ = 1.00±0.07.

Polyethylene A comprised a low molecular weight fraction prepared in the first reactor and a high molecular weight fraction prepared in the second reactor. The weight average molecular weight $M_w$ of the low molecular weight fraction could be measured directly. The weight average molecular weight $M_w$ of the high molecular weight fraction could be calculated as follows:

$$M_w(\text{polyethylene A}) = \text{wt\%(fraction Rx1)} \times M_w(\text{fraction Rx1}) + \text{wt\%(fraction Rx2)} \times M_w(\text{fraction Rx2})$$

With a total $M_w$ for polyethylene A of 165.5 kDa, a contribution of fraction Rx1 of 48.8 % and a $M_w$ of fraction Rx1 of 23 kDa, this results in a molecular weight $M_w$ of fraction Rx2 of 301 kDa.

Polyethylene B was a bimodal Ziegler-Natta PE resin, sold by Total Refining & Chemicals under the name XS10N. The characteristics of polyolefin B can be found in Table 3.

Table 3

| | |
|---|---|
| $MI_5$ (g/10min) | 0.30 |
| HLMI (g/10min) | 7.9 |
| Density (g/cm$^3$) | 0.951 |
| $M_n$ (kDa) | 14.8 |
| $M_w$ (kDa) | 262.1 |
| $M_z$ (kDa) | 1846.6 |
| $D(M_w/M_n)$ | 17.7 |
| $D'(M_z/M_w)$ | 7.0 |
| $g_{rheo}$ | 1.03 |

The value of $g_{rheo}$ of 1.03 means that this ZN bimodal PE does not contain significant amounts of LCB.

Polyethylene C was a bimodal polyethylene prepared in a double loop reactor in the presence of an ethylene-bis(tetrahydroindenyl) zirconium dichloride metallocene catalyst system. The polymerization was carried out in a double loop reactor comprising 2 reactors Rx1 and Rx2 (corresponding to example 8 of EP1201711). The characteristics of polyolefin C can be found in Tables 4 and 5:

Table 4

| | |
|---|---|
| $MI_5$ (g/10min) | 0.25 |
| HLMI (g/10min) | 11 |
| Density (g/cm$^3$) | 0.950 |
| $M_n$ (kDa) | 16 |
| $M_w$ (kDa) | 197 |
| $M_z$ (kDa) | 623.0 |
| D $(M_w/M_n)$ | 12.6 |
| $D'(M_z/M_w)$ | 4.4 |
| $g_{rheo}$ | 0.65 |

Table 5

| Polyethylene C | | | |
|---|---|---|---|
| First reactor (Rx1) operating conditions | density | ($kg/m^3$) | 971.0 |
| | Temperature | (°C) | 80 |
| | Ethylene | (%mol) | 16.2 |
| | $C_6$/ethylene | (%mol/mol) | 0 |
| | $H_2$/ethylene | (%mol/mol) | 44 |
| | $M_w$ | (kDa) | 26 |
| | $MI_2$ | (g/10min) | 149 |
| | Contribution | (wt%) | 55.5 |
| Second reactor (Rx2) operating conditions | Temperature | (°C) | 75 |
| | Ethylene | (%mol) | 14.97 |
| | $C_6$/ethylene | (%mol/mol) | 9.1 |
| | $H_2$/ethylene | (%mol/mol) | 0 |
| | Contribution | (wt%) | 44.5 |

Polyethylene C with a $g_{rheo}$ of 0.65 has about same level of LCB as polyethylene A.

Polyethylene C comprised a low molecular weight fraction prepared in the first reactor and a high molecular weight fraction prepared in the second reactor. The weight average molecular weight $M_w$ of the low molecular weight fraction could be measured directly. The weight average molecular weight $M_w$ of the high molecular weight fraction could be calculated as follows:

$$M_w(\text{polyethylene C}) = \text{wt\%}(\text{fraction Rx1}) \times M_w(\text{fraction Rx1}) + \text{wt\%}(\text{fraction Rx2}) \times M_w(\text{fraction Rx2})$$

With a total $M_w$ for polyethylene C of 197 kDa, a contribution of fraction Rx1 of 55.5 % and a $M_w$ of fraction Rx1 of 26 kDa, this results in a molecular weight $M_w$ of fraction Rx2 of 410 kDa.

The weight average molecular weight $M_w$ of polyethylene B is higher than the weight average molecular weight $M_w$ of polyethylenes A and C. The weight average molecular weight $M_w$ of polyethylene B is lower than the weight average molecular weight $M_w$ of the high molecular weight fractions of polyethylenes A and C. The weight average molecular weight $M_w$ of polyethylene B was higher than the weight average molecular weight $M_w$ of the low molecular weight fractions of polyethylenes A and C.

Polyethylene HDPE 56020 S is a Chromium-catalyzed polyethylene, commercially available from Total Refining & Chemicals. It has a density of 0.952 g/cm$^3$, an HLMI of 2.1 g/10 min, a $M_w$ of 330 kDa, a D ($M_w/M_n$) of 13, and a $g_{rheo}$ of 0.7.

Polyethylene HDPE BM593 is a bimodal Ziegler-Natta catalyzed polyethylene commercially available from Total Refining & Chemicals. It has a density of 0.959 g/cm$^3$, an HLMI of 26 g/10 min, a $M_w$ of 180 kDa, a D ($M_w/M_n$) of 13, and a $g_{rheo}$ of 1.

Polyethylene Total Xsene® 55060 is a bimodal Ziegler-Natta catalyzed polyethylene, commercially available from Total Refining & Chemicals. It has a density of 0.955 g/cm$^3$, $M_w$ of 310 kDa (300-320 kDa), a D ($M_w/M_n$) of 18, and an HLMI of 6 g/10 min (5-7 g/10 min).

Polyethylene XSC50 is a polyethylene, commercially available from Total Refining & Chemicals. It has a density of 0.949 g/cm$^3$, an HLMI of 6 g/10 min, a $M_w$ of 260 kDa, a D ($M_w/M_n$) of 18.5 (18-19), and an $MI_5$ of 0.3 g/10 min.

B215 is an anti-oxidant package sold by Ciba that contains 2 parts of phosphite Irgafos 168 and one part phenolic anti-oxidant Irganox 1010.

**Example 1: Polyethylene composition I**

Polyethylene composition I was prepared using the following procedure: 200 g (corresponding to 10.0 % by weight of polyethylene B) of polyethylene B were weighted and added to 1800 g of polyethylene A fluff in a plastic bag. The polyethylene A and polyethylene B were physically mixed together in the plastic bag and 2000 ppm of B215 was added to the mixture. The mixture was then transferred inside a hopper and was melt-extruded on twin-screw extruder

Brabender TSE20, equipped with smooth screws; at 90 rpm with the following temperature profile: 200 °C, 210 °C, 210 °C, 210 °C, and high throughput (2 kg/h). At the exit of the extruder, the polyolefin composition I was cooled down to room temperature using a water bath and was finally cut into pellets using a Pell-Tec pelletizer.

After extrusion, the bimodal dispersion of high molecular weight (HMW) blocks within the polyethylene matrix was assessed by optical microscopy on press-out cross-sections of samples using darkfield illumination, using an Olympus BH2 microscope fitted with a digital camera. The results are shown in Figure 1. The bimodal dispersion measured with image analysis was 2.1 %. The following observations were made, as shown in Table 6:

Table 6

| Class | Objects | % Objects | Total Area ($\mu m^2$) | Mean Area ($\mu m^2$) |
|---|---|---|---|---|
| 1 | 259 | 97.368423 | 10428.034 | 40.26268 |
| 2 | 3 | 1.1278195 | 4552.7646 | 1517.5883 |
| 3 | 3 | 1.1278195 | 7877.0547 | 2625.6851 |
| 4 | 0 | 0 | 0 | 0 |
| 5 | 0 | 0 | 0 | 0 |
| 6 | 0 | 0 | 0 | 0 |
| 7 | 0 | 0 | 0 | 0 |
| 8 | 0 | 0 | 0 | 0 |
| 9 | 1 | 0.3759399 | 15469.986 | 15469.986 |
| 10 | 0 | 0 | 0 | 0 |
| High $M_w$ inclusion area ($\mu m^2$) | | | 38327.84 | |
| Total area ($\mu m^2$) | | | 1795824.0 | |
| % high $M_w$ nodules | | | 2.134 | |

As a comparative example, polyethylene A was extruded with 2000 ppm of B215 on twin-screw extruder Brabender TSE20 at 90 rpm with the following temperature profile: 200 °C, 210 °C, 210 °C, 210 °C, and high throughput (2 kg/h). The bimodal dispersion of high molecular weight (HMW) blocks within the polyethylene matrix was assessed by optical microscopy on press-out cross-sections of samples using darkfield illumination, using an Olympus BH2 microscope fitted with a digital camera. The results are shown in Figure 2. The bimodal dispersion measured with image analysis was 5.4 %. The following observations were made, as shown in Table 7:

Table 7

| Class | Objects | % Objects | Total Area ($\mu m^2$) | Mean Area ($\mu m^2$) |
|---|---|---|---|---|
| 1 | 353 | 95.148247 | 12077.638 | 34.214272 |
| 2 | 9 | 2.4258759 | 12077.218 | 1341.9131 |
| 3 | 2 | 0.5390835 | 4912.0059 | 2456.0029 |
| 4 | 3 | 0.8086253 | 12583.049 | 4194.3496 |
| 5 | 2 | 0.5390835 | 11164.471 | 5582.2354 |
| 6 | 0 | 0 | 0 | 0 |
| 7 | 0 | 0 | 0 | 0 |
| 8 | 0 | 0 | 0 | 0 |
| 9 | 1 | 0.2695418 | 15766.811 | 15766.811 |
| 10 | 1 | 0.2695418 | 26152.662 | 26152.662 |
| High Mw inclusion area ($\mu m^2$) | | | 94733.85 | |
| Total area ($\mu m^2$) | | | 1769875.00 | |
| % high Mw nodules | | | 5.353 | |

**Example 2: Polyethylene composition II**

Polyethylene composition **II** was prepared using the following procedure: 240 g of polyethylene 8 were weighted

and added to 1760 g of polyethylene C fluff in a plastic bag (corresponding to 12.0 % by weight of polyethylene B). The polyethylene C and polyethylene B were physically mixed together in the plastic bag and 2000 ppm of B215 was added to the mixture. The mixture was then transferred inside a hopper and was melt-extruded on twin-screw extruder Brabender TSE20, equipped with smooth screws; at 90 rpm with the following temperature profile: 200 °C, 210 °C, 210 °C, 210 °C, and high throughput (2 kg/h). At the exit of the extruder, the polyolefin composition II was cooled down to room temperature using a water bath and was finally cut into pellets using a Pell-Tec pelletizer.

After extrusion, the bimodal dispersion of high molecular weight (HMW) blocks within the polyethylene matrix was assessed by optical microscopy on press-out cross-sections of samples using polarized light (PL), using an Olympus BH2 microscope fitted with a digital camera. The results are shown in Figure 3. The bimodal dispersion measured with image analysis was 4.7 %. The following observations were made, as shown in Table 8:

Table 8

| Class | Objects | % Objects | Total Area ($\mu m^2$) | Mean Area ($\mu m^2$) |
|---|---|---|---|---|
| 1 | 201 | 89.73214 | 19929.102 | 99.149757 |
| 2 | 8 | 3.5714285 | 10156.826 | 1269.6033 |
| 3 | 6 | 2.6785715 | 14601.426 | 2433.5708 |
| 4 | 5 | 2.2321429 | 19274.375 | 3854.875 |
| 5 | 4 | 1.7857143 | 24515.098 | 6128.7744 |
| 6 | 0 | 0 | 0 | 0 |
| 7 | 0 | 0 | 0 | 0 |
| High $M_w$ inclusion area ($\mu m^2$) | | | 88476.83 | |
| Total area ($\mu m^2$) | | | 1893050.00 | |
| % high $M_w$ nodules | | | 4.674 | |

As a comparative example, polyolefin C was extruded with 2000 ppm of B215 on twin-screw extruder Brabender TSE20 at 90 rpm with the following temperature profile: 200 °C, 210 °C, 210 °C, 210 °C, and high throughput (2 kg/h). The bimodal dispersion of high molecular weight (HMW) blocks within the polyethylene matrix was also assessed by optical microscopy. The results are shown in Figure 4. The bimodal dispersion measured with image analysis was 7.5 %. The following observations were made, as shown in Table 9:

Table 9

| Class | Objects | % Objects | Total Area ($\mu m^2$) | Mean Area ($\mu m^2$) |
|---|---|---|---|---|
| 1 | 330 | 93.484421 | 24083.791 | 72.981186 |
| 2 | 12 | 3.3994334 | 17719.297 | 1476.6082 |
| 3 | 3 | 0.8498583 | 7356.1958 | 2452.0652 |
| 4 | 3 | 0.8498583 | 9219.9092 | 3073.3032 |
| 5 | 4 | 1.1331445 | 24967.473 | 6241.8682 |
| 6 | 0 | 0 | 0 | 0 |
| 7 | 0 | 0 | 0 | 0 |
| 8 | 0 | 0 | 0 | 0 |
| 9 | 0 | 0 | 0 | 0 |
| 10 | 0 | 0 | 0 | 0 |
| 11 | 0 | 0 | 0 | 0 |
| 12 | 1 | 0.2832861 | 61603.402 | 61603.402 |
| High $M_w$ inclusion area ($\mu m^2$) | | | 144950.07 | |
| Total area ($\mu m^2$) | | | 1929333.00 | |
| % high $M_w$ nodules | | | 7.513 | |

**Example 3: comparative examples**

Polyethylene C (90 wt%) was blended with a Chromium-catalyzed polyethylene HDPE 56020 S (10 wt%), as described in Example 2. The bimodal dispersion was 9.2 % versus 7.5 % for polyethylene C without the Chromium catalyzed polyethylene.

Polyethylene A (95 wt%) was blended with Chromium-catalyzed polyethylene HDPE 56020 S (5 wt%), with 2000 ppm of B215 on twin-screw extruder Brabender TSE20 at 90 rpm with the following temperature profile: 200 °C, 210 °C, 210 °C, 210 °C, and high throughput (2 kg/h). This did not improve bimodal dispersion.

Polyethylene A (90 wt%) was blended with bimodal ZN polyethylene HDPE BM593 (10 wt%), with 2000 ppm of B215 on twin-screw extruder Brabender TSE20 at 90 rpm with the following temperature profile: 200 °C, 210 °C, 210 °C, 210 °C, and high throughput (2 kg/h). This resulted in deterioration of bimodal dispersion.

Polyethylene A (95 wt%) was blended with bimodal ZN polyethylene 55060 (5 wt%), with 2000 ppm of B215 on twin-screw extruder Brabender TSE20 at 90 rpm with the following temperature profile: 200 °C, 210 °C, 210 °C, 210 °C, and high throughput (2 kg/h). This did not improve bimodal dispersion.

Polyethylene A was blended with polyethylene Total Xsene® XSC50, with 2000 ppm of B215 on twin-screw extruder Brabender TSE20 at 90 rpm with the following temperature profile: 200 °C, 210 °C, 210 °C, 210 °C, and high throughput (2 kg/h). This did not improve bimodal dispersion.

An overview of the HLMI for each polyethylene and the ratio between each second polyethylene and first polyethylene is shown in Table 10.

Table 10

| | **HLMI (g/10min)** | **ratio with polyethylene A** |
|---|---|---|
| **Polyethylene A** | **10,9** | |
| Polyethylene B | 7,9 | 0,72 |
| HDPE 56020 S | 2,1 | 0,19 |
| HDPE BM593 | 26 | 2,39 |
| Polyethylene 55060 | 6 | 0,55 |
| Total Xsene® XSC50 | 6 | 0,55 |
| | | **ratio with polyethylene C** |
| **Polyethylene C** | **11** | |
| Polyethylene B | 7,9 | 0,72 |
| HDPE 56020 S | 2,1 | 0,19 |

**Example 4: Pipe applications**

The FNCT for several of the resins above was tested, using the conditions at 80 °C, 4MPa, in Maranil, as described above. The results are shown in Table 11.

Table 11

| Composition | Polyethylene | additive | % HMW LLDPE nodules | FNCT (h) |
|---|---|---|---|---|
| | A | none | 5.4 | 125 (117-145) |
| I | A | 10 wt% PE B | 2.1 | 203 (188-206) |
| | C | none | 7.5 | > 3000 |
| II | C | 12 wt% PE B | 4.7 | > 2500 |

An FNCT value of > 2500 h means that the test was uninterrupted at about 2500 h (each time 5 samples); for which FNCT failure time with Arkopal 100 is estimated to exceed one year.

## Claims

1. A polyolefin composition comprising:

   a) at least one first polyolefin having a multimodal molecular weight distribution and prepared in the presence of at least one metallocene catalyst; and b) at least one second polyolefin having a $M_w/M_n$ of at least 10.0 and a long chain branching index $g_{rheo}$ of at least 0.85, wherein said second polyolefin is present in an amount of at least 1.0 % by weight based on the total weight of the polyolefin composition; wherein the second polyolefin has a High Load Melt Index of at least 0.60 times the High Load Melt Index HLMI of the first polyolefin and of at most 1.40 times the High Load Melt Index HLMI of the first polyolefin, as measured according to ISO 1133 condition G at a temperature of 190 °C under a load of 21.6 kg.

2. The polyolefin composition according to claim 1, wherein the polyolefin is polyethylene.

3. The polyolefin composition according to claim 1 or 2, wherein the first polyolefin comprises a high molecular weight component and a low molecular weight component, wherein the weight average molecular weight $M_w$ of the first polyolefin is lower than the weight average molecular weight $M_w$ of the second polyolefin, and wherein the weight average molecular weight $M_w$ of the second polyolefin is lower than the weight average molecular weight $M_w$ of the high molecular weight component of the first polyolefin.

4. The polyolefin composition according to any one of claims 1 to 3, wherein the second polyolefin was prepared in the presence of at least one Ziegler-Natta catalyst.

5. The polyolefin composition according to any one of claims 1 to 4, wherein the first polyolefin has $M_w/M_n$ ratio of at least 4.5.

6. The polyolefin composition according to any one of claims 1 to 5, wherein the first polyolefin has a High Load Melt Index at most 30 g/10 min, as measured following the procedure of ISO 1133 condition G using a temperature of 190 °C and a load of 21.6 kg.

7. The polyolefin composition according to any one of claims 1 to 6, wherein the first polyolefin has a long chain branching index $g_{rheo}$ that is at most 0.90, preferably at most 0.80, preferably at most 0.70.

8. The polyolefin composition according to any one of claims 1 to 7, wherein the first polyolefin has a weight average molecular weight $M_w$ of at least 80 kDa.

9. The polyolefin composition according to any one of claims 1 to 8, wherein the second polyolefin has a weight average molecular weight $M_w$ of at least 200 kDa.

10. The polyolefin composition according to any one of claims 1 to 9, wherein the second polyolefin has an $M_w/M_n$ of at least 15.0.

11. The polyolefin composition according to any one of claims 1 to 10, wherein the first polyolefin had a bimodal molecular weight distribution.

12. A formed article comprising the polyolefin composition according to anyone of claims 1 to 11.

13. The article according to claim 12, wherein the article is selected from the group comprising: pipes, films, caps and closures.

14. A process for preparing a polyolefin composition according to any one of claims 1 to 11, comprising the steps of:

   (A) providing at least one first polyolefin having a multimodal molecular weight distribution and prepared in the presence of at least one metallocene catalyst;
   (B) providing at least one second polyolefin having a $M_w/M_n$ of at least 10.0 and a long chain branching index $g_{rheo}$ of at least 0.85, wherein said second polyolefin is present in an amount of at least 1.0 % by weight based on the total weight of the polyolefin composition; wherein the second polyolefin has a High Load Melt Index of at least 0.60 times the High Load Melt Index HLMI of the first polyolefin and of at most 1.40 times the High Load

Melt Index HLMI of the first polyolefin, as measured according to ISO 1133 condition G at a temperature of 190 °C under a load of 21.6 kg; and
(C) blending said at least one first polyolefin, with said second polyolefin to obtain the polyolefin composition.

**15.** The process according to claim 14, wherein step (C) is performed in an extruder.

**Patentansprüche**

**1.** Polyolefinzusammensetzung, umfassend:

a) mindestens ein erstes Polyolefin mit einer multimodalen Molekulargewichtsverteilung und hergestellt in Gegenwart mindestens eines Metallocen-Katalysators; und b) mindestens ein zweites Polyolefin mit einem $M_w/M_n$ von mindestens 10,0 und einem Langketten-Verzweigungsindex $g_{rheo}$ von mindestens 0,85, wobei das zweite Polyolefin in einer Menge von mindestens 1,0 Gew.-% vorhanden ist, bezogen auf das Gesamtgewicht der Polyolefinzusammensetzung; wobei das zweite Polyolefin einen Hochlastschmelzindex von mindestens dem 0,60-Fachen des Hochlastschmelzindex HLMI des ersten Polyolefins und von höchstens dem 1,40-Fachen des Hochlastschmelzindex HLMI des ersten Polyolefins aufweist, gemessen gemäß ISO 1133, Bedingung G bei einer Temperatur von 190 °C unter einer Last von 21,6 kg.

**2.** Polyolefinzusammensetzung nach Anspruch 1, wobei das Polyolefin Polyethylen ist.

**3.** Polyolefinzusammensetzung nach Anspruch 1 oder 2, wobei das erste Polyolefin eine Komponente mit hohem Molekulargewicht und eine Komponente mit niedrigem Molekulargewicht umfasst, wobei das Gewichtsmittel des Molekulargewichts $M_w$ des ersten Polyolefins niedriger ist als das Gewichtsmittel des Molekulargewichts $M_w$ des zweiten Polyolefins und wobei das Gewichtsmittel des Molekulargewichts $M_w$ des zweiten Polyolefins niedriger ist als das Gewichtsmittel des Molekulargewichts $M_w$ der Komponente mit hohem Molekulargewicht des ersten Polyolefins.

**4.** Polyolefinzusammensetzung nach einem der Ansprüche 1 bis 3, wobei das zweite Polyolefin in Gegenwart von mindestens einem Ziegler-Natta-Katalysator hergestellt wurde.

**5.** Polyolefinzusammensetzung nach einem der Ansprüche 1 bis 4, wobei das erste Polyolefin ein Verhältnis von $M_w/M_n$ von mindestens 4,5 aufweist.

**6.** Polyolefinzusammensetzung nach einem der Ansprüche 1 bis 5, wobei das erste Polyolefin einen Hochlastschmelzindex von höchstens 30 g/10 min aufweist, gemessen nach dem Verfahren von ISO 1133, Bedingung G, unter Verwendung einer Temperatur von 190 °C und einer Last von 21,6 kg.

**7.** Polyolefinzusammensetzung nach einem der Ansprüche 1 bis 6, wobei das erste Polyolefin einen Langketten-Verzweigungsindex $g_{rheo}$ aufweist, der höchstens 0,90, vorzugsweise höchstens 0,80, vorzugsweise höchstens 0,70 beträgt.

**8.** Polyolefinzusammensetzung nach einem der Ansprüche 1 bis 7, wobei das erste Polyolefin ein Gewichtsmittel des Molekulargewichts $M_w$ von mindestens 80 kDa aufweist.

**9.** Polyolefinzusammensetzung nach einem der Ansprüche 1 bis 8, wobei das zweite Polyolefin ein Gewichtsmittel des Molekulargewichts $M_w$ von mindestens 200 kDa aufweist.

**10.** Polyolefinzusammensetzung nach einem der Ansprüche 1 bis 9, wobei das zweite Polyolefin ein $M_w/M_n$ von mindestens 15,0 aufweist.

**11.** Polyolefinzusammensetzung nach einem der Ansprüche 1 bis 10, wobei das erste Polyolefin eine bimodale Molekulargewichtsverteilung aufwies.

**12.** Geformter Gegenstand, umfassend die Polyolefinzusammensetzung nach einem der Ansprüche 1 bis 11.

**13.** Gegenstand nach Anspruch 12, wobei der Gegenstand aus der Gruppe ausgewählt ist, die Folgendes umfasst:

Rohre, Folien, Kappen und Verschlüsse.

**14.** Verfahren zur Herstellung einer Polyolefinzusammensetzung nach einem der Ansprüche 1 bis 11, umfassend die folgenden Schritte:

(A) Bereitstellen mindestens eines ersten Polyolefins, das eine multimodale Molekulargewichtsverteilung aufweist und in Gegenwart mindestens eines Metallocen-Katalysators hergestellt wird;
(B) Bereitstellen mindestens eines zweiten Polyolefins mit einem $M_w/M_n$ von mindestens 10,0 und einem Langketten-Verzweigungsindex $g_{rheo}$ von mindestens 0,85, wobei das zweite Polyolefin in einer Menge von mindestens 1,0 Gew.-% vorhanden ist, bezogen auf das Gesamtgewicht der Polyolefinzusammensetzung; wobei das zweite Polyolefin einen Hochlastschmelzindex von mindestens dem 0,60-Fachen des Hochlastschmelzindex HLMI des ersten Polyolefins und von höchstens dem 1,40-Fachen des Hochlastschmelzindex HLMI des ersten Polyolefins aufweist, gemessen gemäß ISO 1133, Bedingung G bei einer Temperatur von 190 °C unter einer Last von 21,6 kg; und
(C) Mischen des mindestens einen ersten Polyolefins mit dem zweiten Polyolefin, um die Polyolefinzusammensetzung zu erhalten.

**15.** Verfahren nach Anspruch 14, wobei Schritt (C) in einem Extruder durchgeführt wird.

**Revendications**

**1.** Composition de polyoléfine comprenant :

a) au moins une première polyoléfine ayant une distribution multimodale des masses moléculaires et préparée en présence d'au moins un catalyseur métallocène ; et b) au moins une seconde polyoléfine ayant un $M_w/M_n$ d'au moins 10,0 et un indice de ramification à longue chaîne $g_{rhéo}$ d'au moins 0,85, dans laquelle ladite seconde polyoléfine est présente en une quantité d'au moins 1,0 % en poids par rapport au poids total de la composition de polyoléfine ; dans laquelle la seconde polyoléfine a un indice de fluidité sous charge élevée d'au moins 0,60 fois l'indice de fluidité sous charge élevée HLMI de la première polyoléfine et d'au plus 1,40 fois l'indice de fluidité sous charge élevée HLMI de la première polyoléfine, tel que mesuré selon la condition G de la norme ISO 1133 à une température de 190 °C sous une charge de 21,6 kg.

**2.** Composition de polyoléfine selon la revendication 1, dans laquelle la polyoléfine est un polyéthylène.

**3.** Composition de polyoléfine selon la revendication 1 ou 2, dans laquelle la première polyoléfine comprend un composant de masse moléculaire élevée et un composant de faible masse moléculaire, dans laquelle la masse moléculaire moyenne en masse $M_w$ de la première polyoléfine est inférieure à la masse moléculaire moyenne en masse $M_w$ de la seconde polyoléfine, et dans laquelle la masse moléculaire moyenne en masse $M_w$ de la seconde polyoléfine est inférieure à la masse moléculaire moyenne en masse $M_w$ du composant de masse moléculaire élevée de la première polyoléfine.

**4.** Composition de polyoléfine selon l'une quelconque des revendications 1 à 3, dans laquelle la seconde polyoléfine a été préparée en présence d'au moins un catalyseur de Ziegler-Natta.

**5.** Composition de polyoléfine selon l'une quelconque des revendications 1 à 4, dans laquelle la première polyoléfine a un $M_w/M_n$ d'au moins 4,5.

**6.** Composition de polyoléfine selon l'une quelconque des revendications 1 à 5, dans laquelle la première polyoléfine a un indice de fluidité sous charge élevée d'au plus 30 g/10 min, tel que mesuré selon la procédure de la condition G de la norme ISO 1133 utilisant une température de 190 °C et une charge de 21,6 kg.

**7.** Composition de polyoléfine selon l'une quelconque des revendications 1 à 6, dans laquelle la première polyoléfine a un indice de ramification à longue chaîne $g_{rhéo}$ qui est au plus 0,90, de préférence au plus 0,80, de préférence au plus 0,70.

**8.** Composition de polyoléfine selon l'une quelconque des revendications 1 à 7, dans laquelle la première polyoléfine a une masse moléculaire moyenne en masse $M_w$ d'au moins 80 kDa.

**9.** Composition de polyoléfine selon l'une quelconque des revendications 1 à 8, dans laquelle la seconde polyoléfine a une masse moléculaire moyenne en masse $M_w$ d'au moins 200 kDa.

**10.** Composition de polyoléfine selon l'une quelconque des revendications 1 à 9, dans laquelle la seconde polyoléfine a un $M_w/M_n$ d'au moins 15,0.

**11.** Composition de polyoléfine selon l'une quelconque des revendications 1 à 10, dans laquelle la première polyoléfine a une distribution bimodale des masses moléculaires.

**12.** Article formé comprenant la composition de polypropylène selon l'une quelconque des revendications 1 à 11.

**13.** Article selon la revendication 12, dans lequel l'article est choisi dans le groupe comprenant : des tuyaux, des films, des capuchons et des fermetures.

**14.** Procédé de préparation d'une composition de polyoléfine selon l'une quelconque des revendications 1 à 11, comprenant les étapes consistant à :

(A) fournir au moins une première polyoléfine ayant une distribution multimodale des masses moléculaires et préparée en présence d'au moins un catalyseur métallocène ;
(B) fournir au moins une seconde polyoléfine ayant un $M_w/M_n$ d'au moins 10,0 et un indice de ramification à longue chaîne $g_{rhéo}$ d'au moins 0,85, dans lequel ladite seconde polyoléfine est présente en une quantité d'au moins 1,0 % en poids par rapport au poids total de la composition de polyoléfine ; dans lequel la seconde polyoléfine a un indice de fluidité sous charge élevée d'au moins 0,60 fois l'indice de fluidité sous charge élevée HLMI de la première polyoléfine et d'au plus 1,40 fois l'indice de fluidité sous charge élevée HLMI de la première polyoléfine, tel que mesuré conformément à la condition G de la norme ISO 1133 à une température de 190 °C sous une charge de 21,6 kg ; et
(C) mélanger ladite au moins une première polyoléfine avec ladite seconde polyoléfine pour obtenir la composition de polyoléfine.

**15.** Procédé selon la revendication 14, dans lequel l'étape (C) est réalisée dans une extrudeuse.

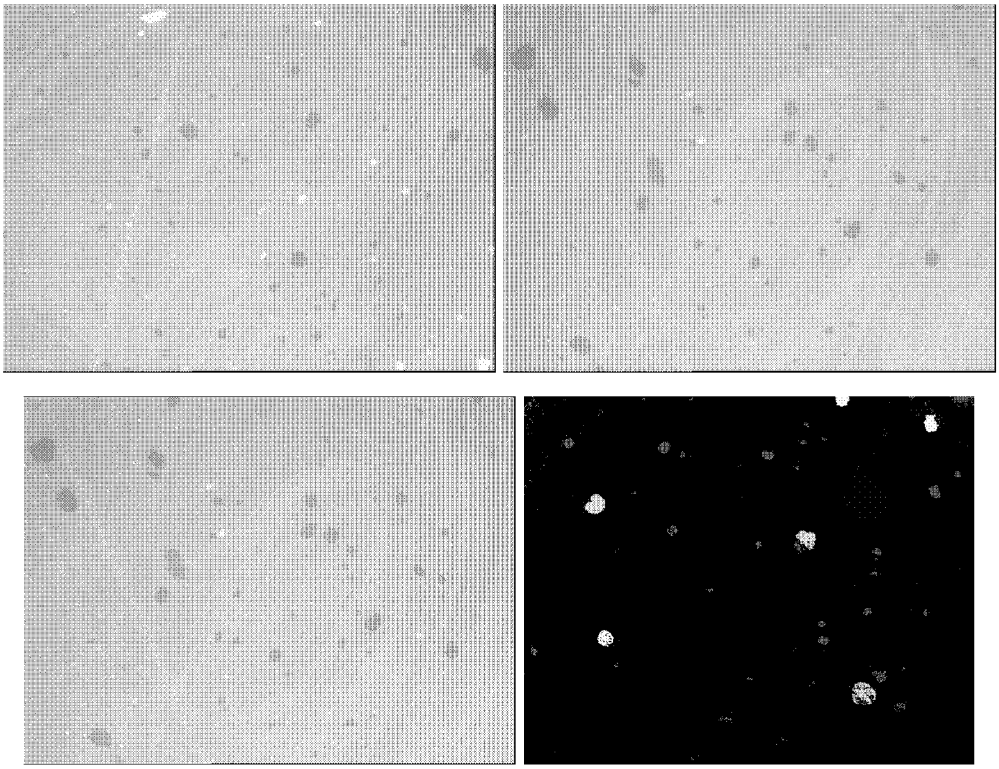

FIG. 1

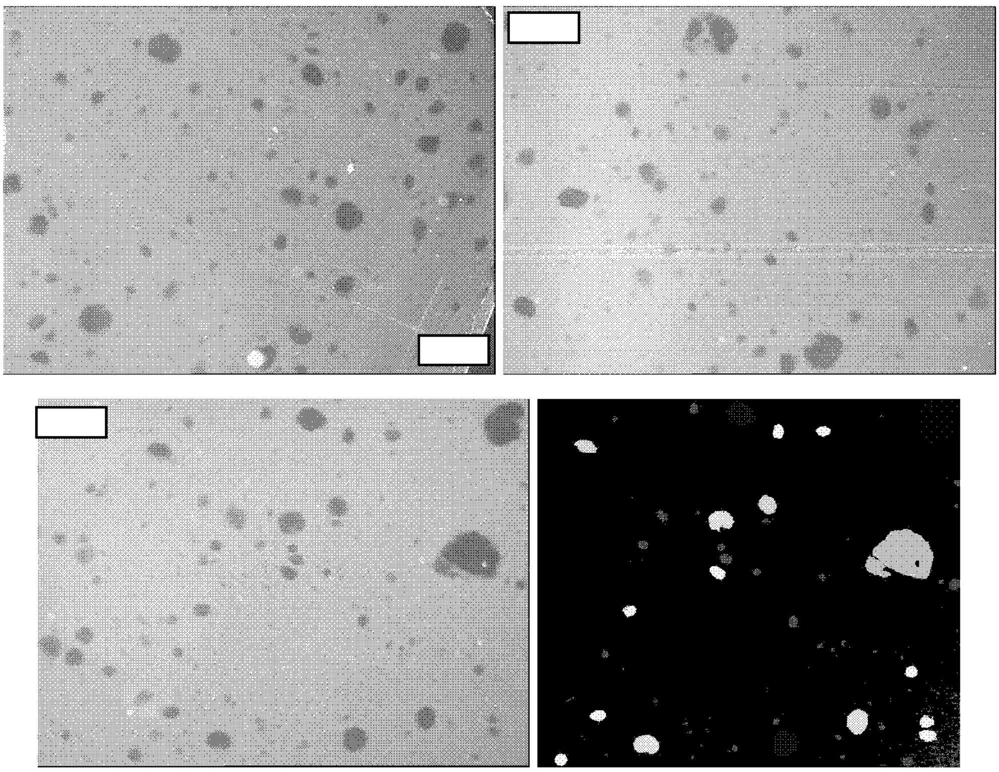

FIG. 2

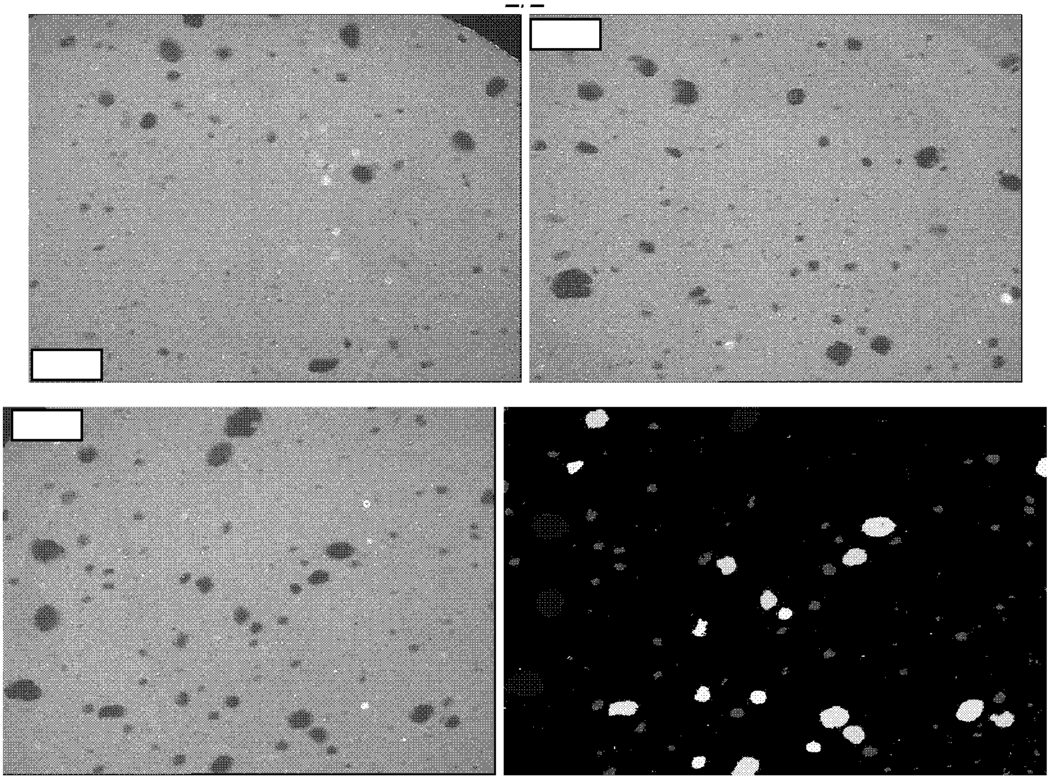

FIG. 3

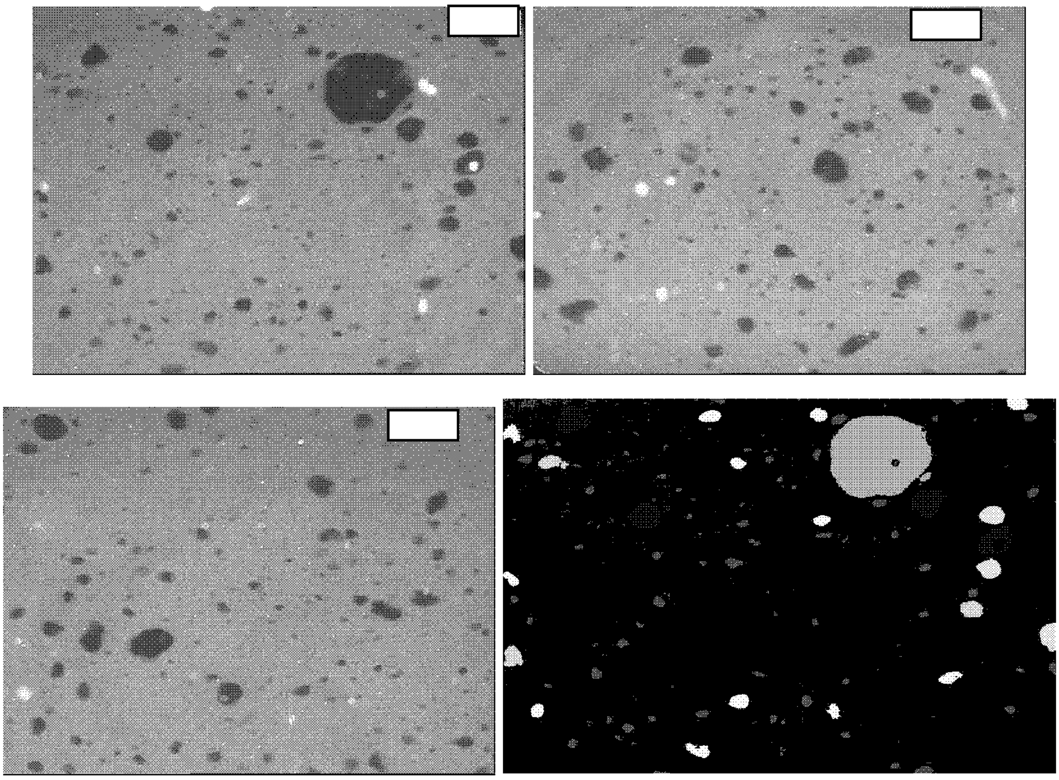

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20130211018 A1
- US 6930071 B
- US 6864207 B
- WO 2008113680 A
- US 20020065368 A
- EP 1201711 A


### Non-patent literature cited in the description


- Plastics Additives Handbook. Hanser Publishers, 2001
- *CHEMICAL ABSTRACTS,* 128961-68-2
- *CHEMICAL ABSTRACTS,* 68411-46-1
- *CHEMICAL ABSTRACTS,* 68411-30-3
- **F.L. SCHOLTEN ; D. GUEUGNAUT ; F. BERTHIER.** A more reliable detergent for cone and full notch creep testing of PE materials. *Proceedings of Plastic Pipes XI Münich,* 03 September 2001
- **D. GUEUGNAUT ; F. BERTHIER ; D. ROUSSELOT.** Using alkylbenzene sulphonates-based chemicals to go over the inefficiency of the current surfactants and to get more rapid and reliable evaluation of E.S.C. Resistance of PE resins. *17th International Plastic Fuel Gas Pipe Symposium,* 20 October 2002